(19) **Europäisches Patentamt / European Patent Office / Office européen des brevets**

(11) **EP 2 800 391 A1**

(12) **EUROPEAN PATENT APPLICATION**
published in accordance with Art. 153(4) EPC

(43) Date of publication:
**05.11.2014 Bulletin 2014/45**

(21) Application number: **12863756.8**

(22) Date of filing: **27.12.2012**

(51) Int Cl.:
*H04N 21/43* (2011.01)　　*H04N 13/04* (2006.01)

(86) International application number:
**PCT/KR2012/011593**

(87) International publication number:
**WO 2013/100641 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 US 201161580308 P**

(71) Applicant: **LG Electronics Inc.**
**Seoul-si 150-721 (KR)**

(72) Inventors:
- **SUH, Jongyeul**
  **Seoul 151-728 (KR)**
- **CHOE, Jeehyun**
  **Seoul 140-012 (KR)**

(74) Representative: **Katérle, Axel**
**Wuesthoff & Wuesthoff**
**Patent- und Rechtsanwälte**
**Schweigerstraße 2**
**81541 München (DE)**

(54) **DIGITAL BROADCAST RECEIVING METHOD FOR DISPLAYING THREE-DIMENSIONAL IMAGE, AND RECEIVING DEVICE THEREOF**

(57) The present invention relates to a digital broadcast receiving method and a receiving device thereof, and more specifically, to a digital broadcast receiving method for displaying a three-dimensional image and a receiving device thereof. To achieve this objective, the digital broadcast receiving method according to one embodiment of the present invention comprises the steps of: receiving and demultiplexing a digital broadcasting signal that includes base view and extended view video streams; confirming discardable information on base view and extended view pictures by using transport packets which form the base view and extended view video streams; and decoding the base view and extended view video streams by using the discardable information.

## FIG. 4C

| Syntax | No. of bits | Format |
|---|---|---|
| discardable_pic_data( ) { | | |
| 　　view_component_start_flag | 1 | bslbf |
| 　　if(view_component_start_flag==1){ | | |
| 　　　　AU_number | 32 | uimsbf |
| 　　　　discardable_pair_flag | 1 | bslbf |
| 　　　　base_view_flag | 1 | bslbf |
| 　　　　if(base_view_flag==1){ | | |
| 　　　　　　discardable_flag | 1 | bslbf |
| 　　　　} | | |
| 　　} | | |
| 　　view_component_end_flag | 1 | bslbf |
| 　　if(view_component_end_flag==1){ | | |
| 　　　　AU_number | 32 | uimsbf |
| 　　} | | |
| } | | |

EP 2 800 391 A1

**Description**

**TECHNICAL FIELD**

The present invention relates to a broadcast digital signal receiving method and a broadcast digital signal receiving apparatus, and more particularly to a broadcast digital signal receiving method and a broadcast digital signal receiving apparatus that are capable of displaying a three-dimensional image.

**BACKGROUND ART**

In recent years, an interest in a three-dimensional image service has been increased. Accordingly, apparatuses that provide a three-dimensional image are under development. There are three types of realization of the three-dimensional image, a stereoscopic type, a volumetric type, and a holographic type.

A basic principle behind the stereoscopic type is that images arranged in a manner that crosses at right angles are separately input into left and right eyes of the human being and the images that are input into the left and right eyes, respectively, are combined to generate a three-dimensional image in the brain. At this time, the images arranged in a manner that crosses at right angles are referred to as a left view image and a right view image, respectively. When the left and right eyes of the human being see the left view image and the right view image through polarizing glasses or through display apparatus itself, a user feels a three-dimensional image effect.

However, two-dimensional images are basically used in digital broadcasting in the related art. Therefore, in order to effectively realize the three-dimensional image service in the digital broadcasting, a method of effectively checking and processing a stereoscopic image signal is considered.

**DISCLOSURE OF THE INVENTION**

Therefore, an object of the present invention is to provide a broadcast digital signal transmitting and receiving method and a broadcast digital signal transmitting and receiving apparatus that are capable of processing a signal for trick play in digital broadcasting which provides a stereoscopic-type three-dimensional image.

An another object of the present invention is to provide a broadcast digital signal transmitting and receiving method and a broadcast digital signal transmitting and receiving apparatus that are capable of processing a signal for trick play in digital broadcasting which provides a multi-view-type three-dimensional image.

A further object of the present invention is to provide a broadcast digital signal transmitting and receiving method and a broadcast digital signal transmitting and receiving apparatus in which a view pair ID and information on each view pair priority are included in PVR assist information in digital broadcasting that provides a multi-view-type three-dimensional image.

A still further object of the present invention is to provide a broadcast digital signal receiving method for and a broadcast digital signal receiving apparatus for natural trick play.

To achieve these and other advantages and in accordance with the purpose of the present invention, as embodied and broadly described herein, there is provided a broadcast digital signal receiving method comprising steps of: receiving and demultiplexing a broadcast digital signal in which video streams at a reference point in time and at an extension point in time are included; processing discardability information on pictures at the reference point in time and at the extension point in time using transport packets that make up the video streams at the reference point in time and at the extension point in time; and decoding the video streams at the reference point in time and at the extension point in time using the discardibility information.

In the method, the discardibility information may be included in a first transport packet, among multiple transport packets that make up the pictures at the reference at the point in time and at the extension point in time.

In the method, the discardability information may be indicated by at least one among a discardble_pair_flag field and a discardable_flag field that are included in the first transport packet.

In the method, the diserdable_pair_flag field may indicate whether or not the transport packet is decoded if 3D trick play is performed, and the discardable_flag field may indicate whether or not the transport packet is decoded if 2D trick play is performed.

In the method, the discardable_pair_flag field and the discardable_flag field may be together included in a single syntax structure.

In the method, if the 3D trick play is performed, when a value of the discardable_pair_flag field included in the header information in the first transport packet is 1, the decoding of the multiple transport packets that make up the pictures at the reference point in time and at the extension point in time and that have the same access unit number as an access unit number of the first transport packet may be omitted.

In the method, if the 2D trick play is performed, when a value of the discardable_flag field included in the header information on the first transport packet is 1, the decoding of the multiple transport packets that make up the picture at the reference point in time and that have the same access unit number as the access unit number of the first transport packet may be omitted.

In the method, the discardable_flag field may be provided only in a 1-PID multiplex mode.

In the method, if the video streams at the reference point in time and at the extension point in time are received in a 2-PID multiplex mode and the 2D trick play is performed, the discardability information may be extracted from the transport packet that corresponds to a PID value of the video stream at the reference point in time.

In the method, the discardability information may be information on the transport packet of which the decoding is omitted, among the transport packets that make up the video streams at the reference point in time and at the extension point in time.

In the method, the video streams at the reference point in time and at the extension point in time may have video stream sections at different points in time, respectively.

To achieve these and other advantages and in accordance with the purpose of the present invention, as embodied and broadly described herein, there is provided a broadcast digital signal receiving apparatus including: a tuner that receives a broadcast digital signal in which video streams at a reference point in time and at an extension point in time are included; a demultiplexer that demultiplexes the broadcast digital signal into the video streams at the reference point in time and at the extension point in time; a PVR processor that processes discardability information on pictures at the reference point in time and at the extension point in time using transport packets that make up the video streams at the reference point in time and at the extension point in time; a decoder that decodes the video streams at the reference point in time and at the extension point in time using the discardability information; and a 3D video processor that controls the decoded video streams at the reference point in time and at the extension point in time.

The apparatus may further include a storage unit in which the transport packet associated with the discardability information and a file associated with trick play control are stored.

In the apparatus, the discardibility information may be included in a first transport packet, among multiple transport packets that make up the pictures at the reference at the point in time and at the extension point in time.

In the apparatus, in response to a control command to perform 3D trick play, the decoder may omit the decoding of the multiple transport packets that make up the pictures at the reference point in time and at the extension point in time and that have the same access unit number as an access unit number of a first transport packet, when a value of a discardable_pair_flag field included in header information on the first transport packet is 1.

In the apparatus, in response to a control command to perform 2D trick play, the decoder may omit the decoding of the multiple transport packets that make up the picture at the reference point in time and that have the same access unit number as an access unit number of a first transport packet, when a value of a discardable_flag field included in header information on the first transport packet is 1.

According to the present invention, it is possible that a signal for trick play is processed by assigning a discardable picture set to two views which make up a three-dimensional image in digital broadcasting that provides a stereoscopic-type three-dimensional image.

In addition, according to the present invention, it is possible that a signal for trick play for a multi-view type three-dimensional image is processed by assigning an MVC access unit (AU) and an MVC sub-AU that are safely removable in digital broadcasting that provides a multi-view type three-dimensional image.

In addition, according to the present invention, in the digital broadcasting that provides the multi-view type three-dimensional image, trick play for a multi-view type three-dimensional image is effectively provided by storing view pair ID and information on each view pair priority in PVR assist information.

## BRIEF DESCRIPTION OF THE DRAWINGS

FIG. 1 is a diagram for describing a method of providing a trick play in a two-dimensional image;
FIGS. 2a and 2b are diagrams for describing a configuration of an MVC bitstream;
FIG. 3 is a diagram for describing the configuration of the MVC bitstream that is received in a non-periodic manner;
FIGS. 4a, 4b, and 4c are diagrams for describing a syntax structure that enables information on a discardable picture to be signaled at a transport stream level;
FIGS. 5a and 5b are flowcharts illustrating a process in which discardable_pic_data is obtained to the trick play in a broadcast digital signal receiving method and a broadcast digital signal receiving method that are capable of displaying a three-dimensional image according to one embodiment of the present invention;
FIG. 6 is a block diagram for describing the broadcast digital signal receiving apparatus capable of displaying the three-dimensional image according to one embodiment of the present invention;
FIGS. 7a and 7b are diagrams for describing a method in which information on the discardable picture is provided in a multi-view type three-dimensional image in the broadcast digital signal receiving method and the broadcast digital signal receiving apparatus that are capable of displaying the three-dimensional image according to one embodiment of the present invention;

FIG. 8 is a flow chart illustrating a process in which the discardable_pic_data is obtained to provide the trick play is performed on a 3 D view that is configured from two or more MVC streams in the broadcast digital signal receiving method and the broadcast digital signal receiving apparatus that are capable of displaying the three-dimensional image according to one embodiment of the present invention.

FIG. 9 is a block diagram for describing the broadcast digital signal receiving apparatus capable of displaying the three-dimensional image according to one embodiment of the present invention;

FIGS. 10a, 10b, 10c and 10d and FIGS. 11a, 11b, 11c and 11d are diagrams for describing a method in which reproduction of an image is controlled in a trick play mode in the broadcast digital signal receiving method and broadcast digital signal receiving that are capable of displaying the three-dimensional image according to one embodiment of the present invention; and

FIG. 12 is a block diagram for describing a process in which data is processed by a transmitting apparatus for transmitting the broadcast digital signal.

## MODES FOR CARRYING OUT THE PREFERRED EMBODIMENTS

Reference will now be made in detail to the preferred embodiments of the present invention, examples of which are illustrated in the accompanying drawings.

A term 3-D or 3D is used in explaining a visual expression or a display technology for reproducing a three-dimensional image (hereinafter referred to as a "3D image) that gives the illusion of depth. The visual cortex of a viewer interprets two images, a left view image and a right view image, as one 3D image.

An apparatus capable of displaying the 3D image employs the 3D display technology for processing and expression of the 3D image. The apparatus capable of displaying the 3D image selectively uses a special viewing device in order to effectively provide the viewer with the 3D image.

Examples of the processing and the expression of the 3D image includes capturing of a stereoscopic image/stereoscopic video, capturing of a multi-view image/multi-view video using multiple cameras, processing of a two-dimensional image and of information on depth, and the like. Examples of the apparatus capable of displaying the 3D image include a liquid crystal display (LCD), a digital TV screen, a computer monitor, and the like that are equipped with hardware or software components that are suitable for supporting the 3D image display technology. The special view devices include specialized glasses, goggles, a headgear, eyewear, and the like.

Specifically, the 3D image display technologies includes an anaglyph three-dimensional image (normally, viewable with passive red/cyan glasses) technology, a polarized three-dimensional image (normally, viewable with passive polarized glasses) technology, an alternate-frame sequencing (normally, active shutter glasses and a head gear are used for view) technology, an auto stereoscopic display technology using a lenticular or barrier screen, and the like. Various technical ideas and features that are described below are applicable to these technologies.

One example of the 3D image display technologies uses optical devices that rotate or alternately operate, for example, segmented polarizers that are attached to a color filter wheel, in which case the optical devices are synchronized with each other. Another example of the 3D image display technologies uses a digital light processor (DLP) that is based on a digital micro mirror device (DMD) which use a rotatable microscopic mirrors that are arranged in a rectangular array which correspond to pixels in an image to be displayed.

On the other hand, new types of standards associated with 3D image rendering and with the display technology (particularly, a 3D TV) are under development at various companies, consortia, and organizations. Example of this includes the Society of Motion Picture and Television Engineers (SMPTE), the Consumer Electronics Association (CEA), the 3d@Home Consortium, the International Telecommunication Union (ITU) and the like. In addition to these, standard groups, such as DVB, BDA, ARIB, ATSC, DVD Forum, and IEC participate in developing the new types of standards. The Moving Picture Experts Group (MPEG) participates in 3D image coding of a multi-view image, a stereoscopic image, and a two-dimensional image having information on depth. In the MPEG, standardization of Multi-view Video Codec Extension for MPEG-4 Advanced Video Coding (AVC) is currently under development. Stereoscopic image coding and stereoscopic distribution formating are associated with color shifting (anaglyph), pixel sub-sampling (side-by-side, checkerboard, quincunx, and the like), and enhanced video coding ((2D + delta), (2D + metadata), and 2D having information on depth). The technological ideas and features described here are applicable to these standards.

At least one portion of the technological ideas and features is associated with the 3D image display technology that is described in terms of image reproduction for and a display environment for a digital image or 3D TV. However, detailed contents of such a portion are not for limiting the various features that are described here, and are applicable to another type of display technology and apparatus. For example, a 3D TV technology is applicable not only to TV broadcasting, but also to a Blu-ray Disc™, a console game, cable and IPTV transmission, content transfer for a mobile phone, and the like, in which case they are compatible with other types of TV, set-top boxes, Blu-ray Disc™ players, DVD players, and TV content distributors.

Referring back to the method of processing and expressing the 3D image processing, stereoscopic image/video capturing is called a stereo imaging method that considers two points in time, and multi-view image/video capturing is called a multi-view imaging method that uses multiple cameras.

The stereo imaging method uses a pair of left view and right view images that are obtained by imaging the same photographic subject with a left-side camera and a right-side camera. The multi-view imaging method uses three or more images that are obtained by imaging the same photographic subject with three or more cameras, each of which is positioned a constant distance from the photographic subject or has a constant viewing angle. In the multi-view imaging method, two images among the images are designated as a left view image and a right view image and thus realization of the three-dimensional image is possible. However, the present invention is not limited to this, and realization of another type of three-dimensional image that uses three or more images (for example, an integral imaging method) is possible.

For transmission, a stereo image or a multi-view image is compressed and coded using various methods including the Moving Picture Experts Group (MPEG) standard. For example, for transmission, the stereo image or the multi-view image is compressed and coded using the H.264/Advanced Video Coding (AVC) standard. At this time, in order to obtain the 3D image, a receiving system decodes a received image using the H.264/Advanced Video Coding (AVC) standard.

In addition, one image among the stereo image and the multi-view image is designated as an image in a base layer and the other is designated as an image in an extend layer. The image in the base layer is coded using the same manner as a monoscopic image, and is transmitted, and for the image in the extended layer, only information on relationship between the images in the base layer and the extended layer is coded and is transmitted. As examples of the compression and coding method, the standards, such as JPEG, MPEG-2, MPEG-D, H.264/AVD, are used, and as the method of compressing and coding the image in the extended layer, the H.264/Multi-view Video Coding (MV) standard is used.

On the other hand, in a broadcast digital signal receiving method and a broadcast digital signal receiving apparatus that are capable of outputting the three-dimensional image, an access time for reproducing the image is selectively (or in a designated manner) controlled to an arbitrary access time, and a trick play is provided that reproduces the image in such a manner as to correspond to the arbitrary access time.

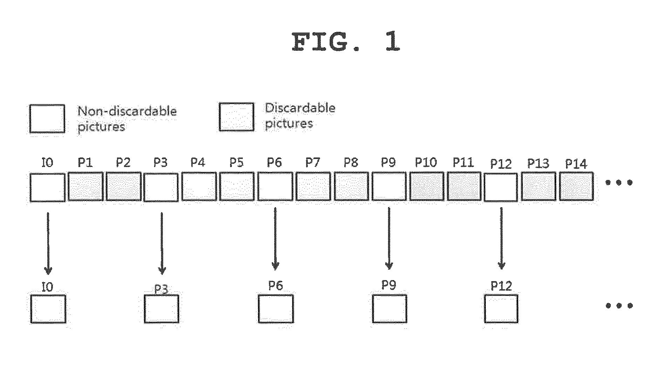

First, a method of providing the trick play in an existing two-dimensional broadcast digital signal receiving apparatus (for example, a 2D TV set) is described below referring to FIG. 1. This is done to help understand a method of providing the trick play that is performed on the three-dimensional image in a broadcast digital signal receiving method and a broadcast digital signal receiving apparatus that are capable of outputting the three-dimensional image, according to the present invention.

In order to support the trick play that is performed on the image to be reproduced, a discardable picture, among streams that correspond to a two-dimensional image is used in the two-dimensional broadcast digital signal receiving apparatus.

At this point, if the two-dimensional image is coded, the discardable picture means a picture that is not used as a reference, among multiple pictures. Accordingly, although not reproduced in a trick play process, that is, although skipped, the discardable picture, has not an effect on normal decoding of other pictures.

Therefore, in the broadcast digital signal receiving apparatus, particularly a personal video recorder (PVR), if specific pictures are skipped to produce an fast reproduction effect, the specific pictures, such as the discardable pictures, are skipped to produce toe fast reproduction effect.

For example, as illustrated in FIG. 1, if the trick play is performed in the two-dimensional image that are configured from pictures I0, P1, P2, P3, P4, P5, P6, P7, P8, P9, P10, P11, P12, P13, and P14, the pictures P1, P2, P4, P5, P7, P8, P10, P11, P13, and P14 that correspond to the discardable pictures are skipped in the broadcast digital signal receiving apparatus, and the pictures I0, P3, P6, P9, P12 that correspond to non-discardable pictures are reproduced to provide the trick play.

On the other hand, the discardable pictures are differently designated according to a coding technique for the two-dimensional image. For example, if the two-dimensional image is video that is obtained by coding in the PEG-2 standard, a B-picture that is not used as a reference picture is used as the discardable picture. In addition, otherwise, if the two-dimensional image is video that is obtained by coding the H.264/AVC standard, a picture that has a slice in which a value of nal_ref_idc of a nal slice header is used as the discardable picture.

On the other hand, otherwise, for example, a video stream for each of at least two images that realize the three-dimensional image, for example, a transport stream, is present in the three-dimensional image, a reference against which to determine whether or not the pictures, which correspond to the at least two images, respectively, are all the discardable pictures.

Accordingly, a broadcast digital signal receiving method and a broadcast digital signal receiving apparatus that are capable of outputting the three-dimensional image, according to one embodiment of the present invention, proposes a method in which only if a base view and a dependent view that make up a three-dimensional view (or three-dimensional image) are all the discardable pictures, the base view and the dependent view are designated as the discardable pictures and this information is processed at a transport packet level. Accordingly, according to the present invention, in the digital signal receiving apparatus capable of outputting the three-dimensional image may not determine whether or not each of all nal slices that are included in the base view and the dependent view that make up the three-dimensional view (or three-dimensional image) is a discardable nal slice that can skip the trick play.

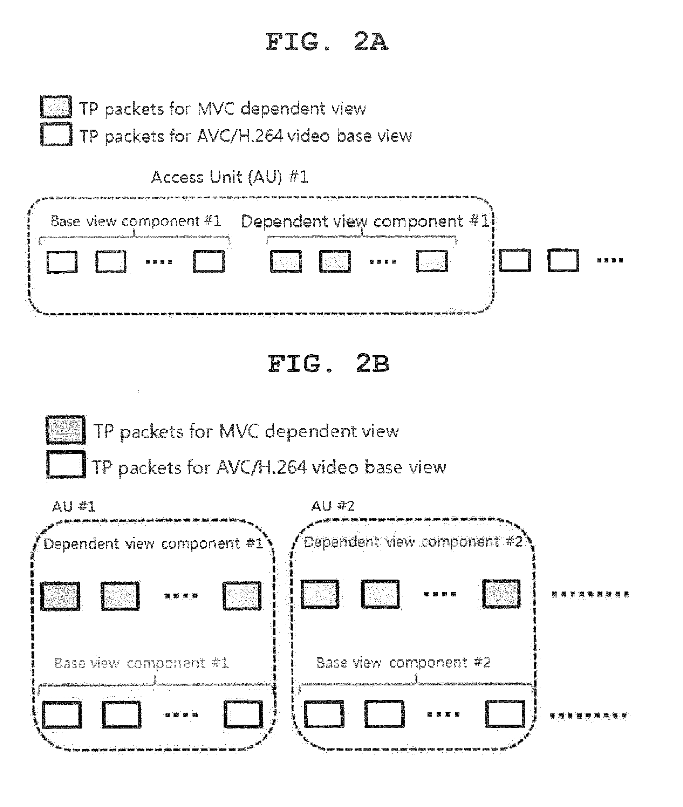

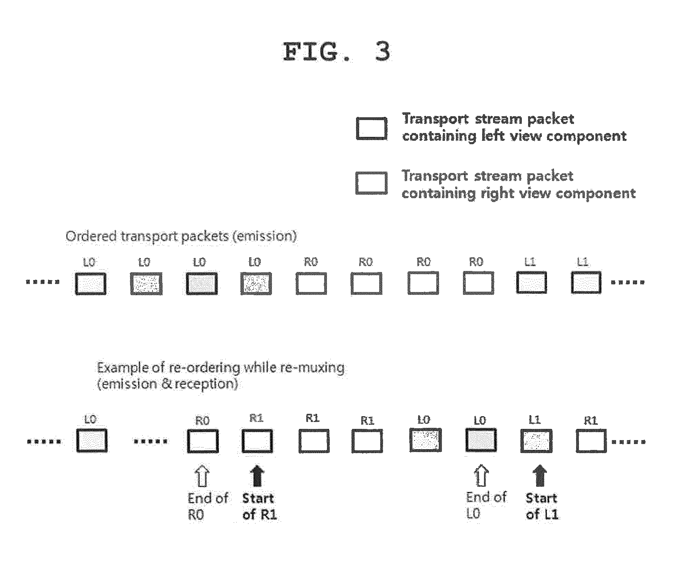

A method of providing the smooth trick play in the digital broadcasting that provides the three-dimensional image based on MVC is described in detail below referring to the accompanying drawings. FIGS. 2a and 2b are diagrams for describing a configuration of an MVC bitstream. FIG. 3 is a diagram for describing the configuration of the MVC bitstream that is received in a non-periodic manner.

First, the configuration of the MVC bitstream for realizing the three-dimensional image based on the MVC is described. The MVC bitstream is broadly configured from two types of multiple modes.

A first mode is a 1-PID multiplex mode (or a 1-PID mode). In the 1-PID multiplex mode, one MVC access unit (MVC AU) is included in one PED packet in the configuration of the MVC bitstream. At this point, base and dependent view components are all included in one MVC AU.

On the other hand, at this point, the view components, which are obtained by coding using the MVC, refer to a base view and a dependent view, respectively, and mean any one among the left view image and the right view image. In this manner, in the 1-PED multiplex mode, the two corresponding view components are combined into one access unit.

Accordingly, as illustrated in Fig. 2a, in the 1-PID multiplex mode, multiple transport packets (TPs) that make up one base view component and multiple transport packets (TPs) that make up one dependent view component that has the same point in time as the one base view component are included in one MVC AU. In this manner, in the 1-PID multiplex mode, the transparent packets that make up the base and dependent view components are sequentially inserted into one transport stream.

On the other hand, a second mode, which is different from the first mode in which the MVC bitstream for realizing the three-dimensional image based on the MVC is configured is a 2-PID multiplex mode (or 2-PID).

In the 2-PID multiplex mode, one PED packet includes one view component, and each of different transport streams (TSs) are configured form transport packets for different views.

As illustrated in FIG. 2b, one MVC AU is configured from the transport port packets of the base and dependent view components that are included in the different transport streams, and that correspond to each other and correspond to one picture (or frame). That is, in this case, the transport packets that correspond to the first base view component are included in an MVC base view stream, and the transport packets that corresponds to the first dependent view component which corresponds to the first base view component are included in an MVC dependent view stream. Thus, the transport packets in the MVC base view stream and the transport packets in the MVC dependent view stream are received as being in separate transport streams, respectively.

On the other hands, the base view component is expressed as an MVC base view sub-bitstream in the 1-PID multiplex mode, and is expressed as an AVC video sub-bitstream of MVC in the 2-PID multiplex mode. In addition, the base view component is a component that corresponds to a reference image, among the two view components that are obtained by coding using the MVC, and means a stream that is decodable using an existing AVC.H.266 decoder.

On the other hand, the dependent view component is a stream that is decodable using Annex H of ISO/IEC 14496-10, and corresponds to the MVC extension stream. Decoding of the dependent view component is possible with an inter-view prediction using a result of the base view decoding or with the inter-prediction between the dependent view components.

Accordingly, as described referring to FIGS. 2a and 2b, in the 1-PID multiplex mode, one AU is included in one PES packet, and thus the transport packets are not mixed in AU units. However, in the 2-PID multiplex mode, the base and dependent view components that make up one AU are included the different PES packets, and thus although frame numbers (or picture numbers) per the view component increase in sequence, the view components that make up one AU unit may be arranged in such a manner that they are not adjacent to one another in sequential order.

For example, as illustrated in FIG. 3, in the 2-PID multiplex mode, although the transport packets of each view component are sequentially transmitted at the transmitting side, the transport packets of each view component may not be sequentially enumerated per AU unit while going through a re-multiplexing process at the receiving side. Accordingly, as illustrated, before enumerating of the transport packets corresponding to L0 is terminated, the transport packets corresponding to R0 or R1 may be enumerated. Accordingly, in this case, demarcation between each AU is blurred, and thus there occurs a problem that only the transport packet corresponding to the desired AU is difficult to select in the trick play process. Thus, positions of a starting point and an ending point need to be designated per view component. Furthermore, a method is necessary in which AU_number and discardibility of the base and dependent view components included within the corresponding AU are signaled at a transport packet point from which one frame starts.

Therefore, referring to the accompanying drawings, a method is described in detail below in which regardless of whether the MVC bitstream is configured in the 1-PID multiplex mode or in the 2-PID multiplex mode, information on the discardable picture is provided at a transport stream level.

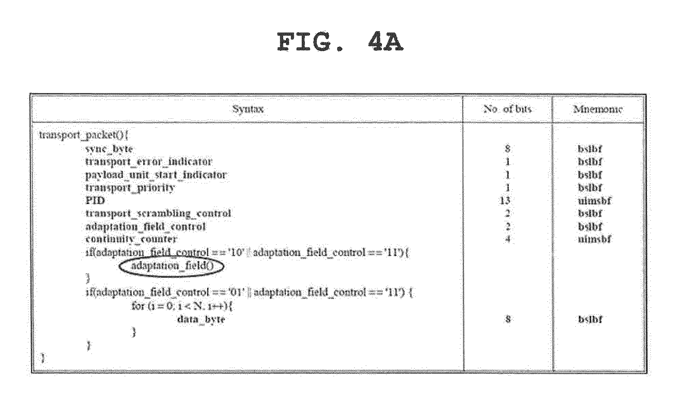

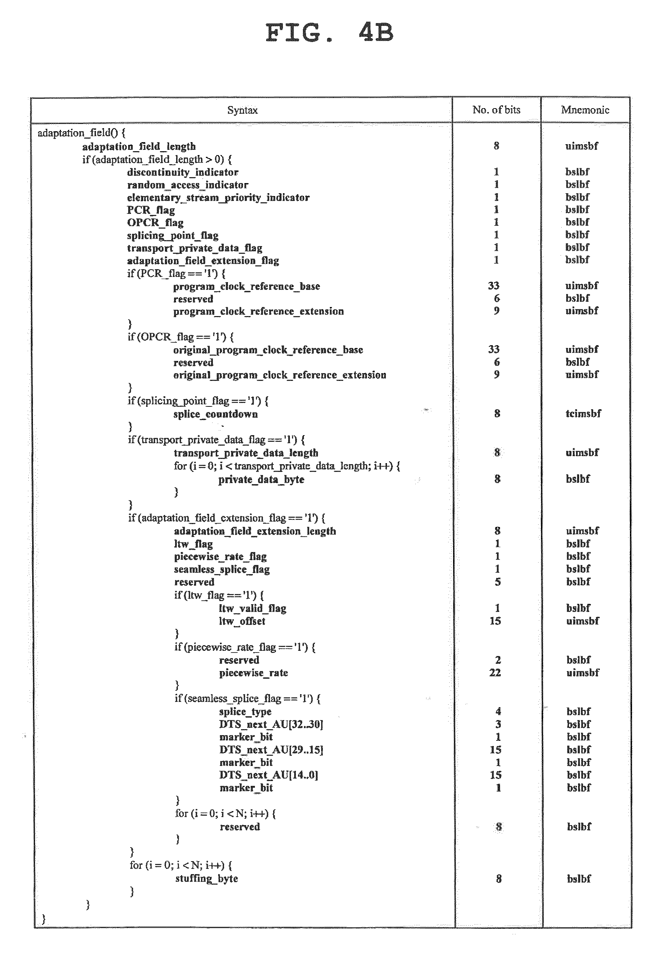

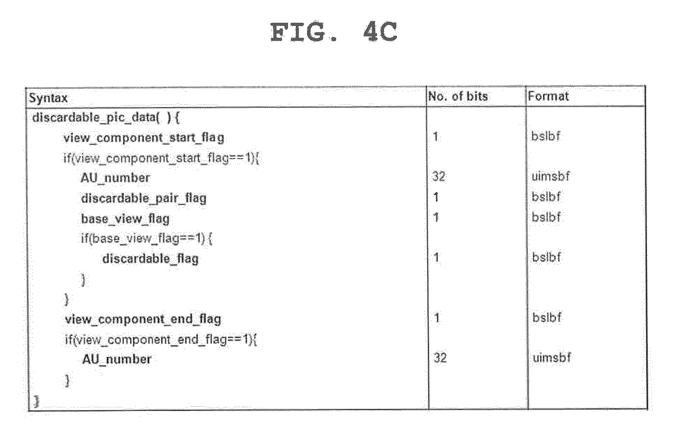

FIGS. 4a, 4b, and 4c are diagrams for describing a syntax structure that enables information on a discardable picture to be signaled at a transport stream level.

Fields for processing data relating to the discardable picture, illustrated in FIGS. 4a, 4b, and 4c are described below. For a brief description according to the present invention, an English expression of the field that makes up the syntax is used as is and the field is put in quotation marks for its identification.

Referring to FIG .4a, the information on the discardable picture is provided using "adaptation_fieid()" in "transport packet()."

The "adaptation_field()" is present if "adaptation_field_control" that is included in header information on the transport packet is '10' or '11.'

"Adaptation_field_control" indicates whether or not "adaptation_field()," or a payload is present in a payload portion.

On the other hand, if "adaptation_field_control" is '10,.' a value of "adaptation_field_length" is 183, and if "adaptation_field_control" is '11,' a value of "adaptation_field_length" is in a range of 0 to 182.

On the other hand, if "adaptation_field_control" is '10,' or '11,' the information on the discardable picture is included in a "private_data_byte" field.

In FIG. 4b, a "transport_private_data_flag" field is present in the "adaptation_field()."

"transport_private_data_flag" indicates whether or not "private_data_byte" is present in the "adaptation_field()."

At this point, if a value of the "transport_private_data_flag" is '1,' a "private_data_byte" field that is one or byte in length is present in the "adaptation_field()."

Then, if a value of the "transport_private_data_flag" is '0,' the "private_data_byte" field is not present in the "adaptation_field()."

In this manner, if the value of the "transport_private_data_flag" that is included in the "adaptation_field()" is '1,' the "private_data_byte" field is not present in the "adaptation_field()."

On the other hand, if the value of the "transport_private_data_flag" is '1,' the "private_data_byte" field is present in the "adaptation_field()," and if "transport_private_data_length" indicates how many bytes the "private_data_byte" field occupies.

In such a syntax structure of the transport packet, the discardable picture information, that is, 'discardable_pic_data' is positioned in the "private_data_byte" field. That is, the "private_data_byte" includes the detailed information on the discardable picture.

The syntax structure of "discardable_pic_data()" that is positioned in the "private_data_byte" field is described in detail below referring to FIG. 4c.

A "discardable_pic_data()" field for providing the information on the discardable picture includes at least one among multiple fields illustrated in Fig. 4c.

The "discardable_pic_data()" includes the fields for processing the discardable picture.

First, "view_component_start_flag" indicates whether the transport packet in which the "view_component_start_flag," is included, that is, the current transport packet, is the first transport packet of a corresponding view component frame that includes the current transport packet. That is, a value of "view_component_start_flag" is '1,' the transport packet in which the "view_component_start_flag" that has a value of '1' is included is the first transport packet of the view component frame that includes the transport packet in which the "view_component_start_flag" that has the value of '1' is included.

If a value of the "view_component_start_flag" is '0,' the transport packet in which the "view_component_start_flag" that has a value of '0' is included is not the first transport packet of the arbitrary view component frame that includes the transport packet in which the "view_component_start_flag" that has the value of '0' is included.

In this manner, through a "view_component_start_flag" field, the "discardable_pic_data()" provides information on which of the multiple transport packets that make up the arbitrary view component frame is the first transport packet.

On the other hand, the "discardable_pic_data()" provides discardability information on the view component frame that includes the first transport packet and on a stereo view pair, using the transport packet in which the "view_component_start_flag" is the value of '1,' that is, the first transport packet among the multiple transport packets that make up an arbitrary view component frame.

An "AU_number" field, another field that makes up the "discardable_pic_data()" field, indicates a number of the access unit (AU) corresponding to the transport packet in which the "AU_number" field is included. In the 1-PID multiplex mode, "AU_number" may be the number of the access unit that includes all transport packets that correspond to the base view and the dependent view, respectively (refer to FIG. 2a).

On the other hand, the "AU_number" is expressed by a concatenation of a GOP series number (high-level 24 bits) and a display order (or decoding order) (low-level 8 bits) within GOP.

Next, "discardable_pair_flag" indicates whether two pictures that correspond to the stereo view pair which corresponds to the current stream are all the discardable pictures. That is, the "discardable_pair_flag" indicates whether the two pictures that correspond to a pair of the base view and the dependent view that is realized through the multiple transport packets that are included in the access unit in which the transport packet in which the "discardable_pair_flag" is included is included are all the discardable pictures.

More specifically, in the 1-PID multiplex mode, when a value of the "discardable_pair_flag" is '1,' a first picture that is realized through the access unit in which the current transport packet is included, and a second picture that is realized through the different access unit that has the same number as the number of the access unit in which the current transport packet is included are all discardable. At this point, the first picture and the second picture are pictures that make up a stereo view pair.

Therefore, the value of the "discardable_pair_flag" is '1,' the two pictures that correspond to the stereo view pair that corresponds to the current stream are all discardable at the time of 3D trick play.

Next, the "base_view_flag" is a field that indicates whether a view that includes the current transport packet is the base view or the dependent view. That is, if a value of the "base_view_flag" is '1,' a picture that corresponds to the transport packet in which the "base_view_flag" is included is the base view. Then, if the value of the "base_view_flag" is '0,' a picture that corresponds to the transport packet in which the "base_view_flag" having the value of '0' is included is the dependent view.

Next, if values of nal_ref_idc fields of all nal slices that are included within a picture that corresponds to the current stream are all '0,' "discardable_flag" has the value of '1.' That is, if the values of the nal_ref_idc fields of all the nal slices that make up the picture that corresponds to the transport packet in which the "discardable_flag" is included are '0,' the picture is discardable, and therefore a value of the "discardable_flag" determining whether or not the picture is discardable is '1.' On the other hand, even though the value of the nal_ref_idc field of one, among the slices that are included within the picture, is '1,' the "discardable_flag" has the value of '0.'

On the other hand, a "base_view_flag" field (or view_component_ID) described above, is significant in the 1-PID multiplex mode in which the base view and the dependent view make up one access unit. That is, because the base view and the dependent view are identifiable through a PID value included in a transport header in a 2-PID multiplex mode (or N-PID multiplex mode), the "base_view_flag" may not be included in the 2-PID multiplex mode.

Next, "view_component_end_flag" indicates whether the transport packet in which the "view_component_end_flag" is included, that is, a current transport packet, is the last transport packet of the corresponding view component frame that includes the current transport packet. That is, if a value of the "view_component_end_flag" is '1,' the transport packet in which the "view_component_end_flag" having the value of '1' is included is the last transport packet of an arbitrary view component frame in which the transport packet in which the "view_component_end_flag" having the value of '1' is included is included. In the other cases, the value of the "view_component_end_flag" is set to '0.'

A process is described below in which "discardable_pic_data" that has the structure defined as in FIGS. 4a, 4b, and 4c is processed. The syntax structure associated with the discardable_pic_data described above is differently processed depending on whether the MVC bitstream is configured in the 1-PID multiplex mode or in the 2-PID multiplex mode.

A process is described below, in which the discardable_pic_data is obtained (processed) in the receiving apparatus.

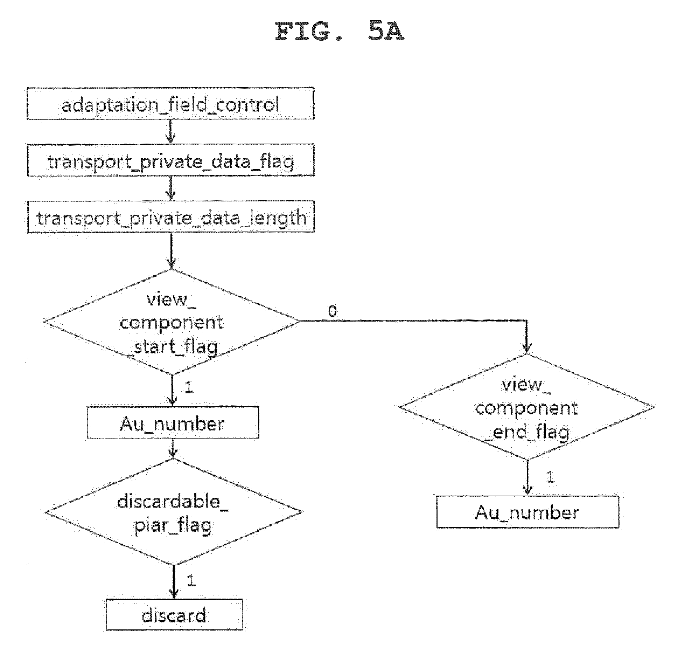

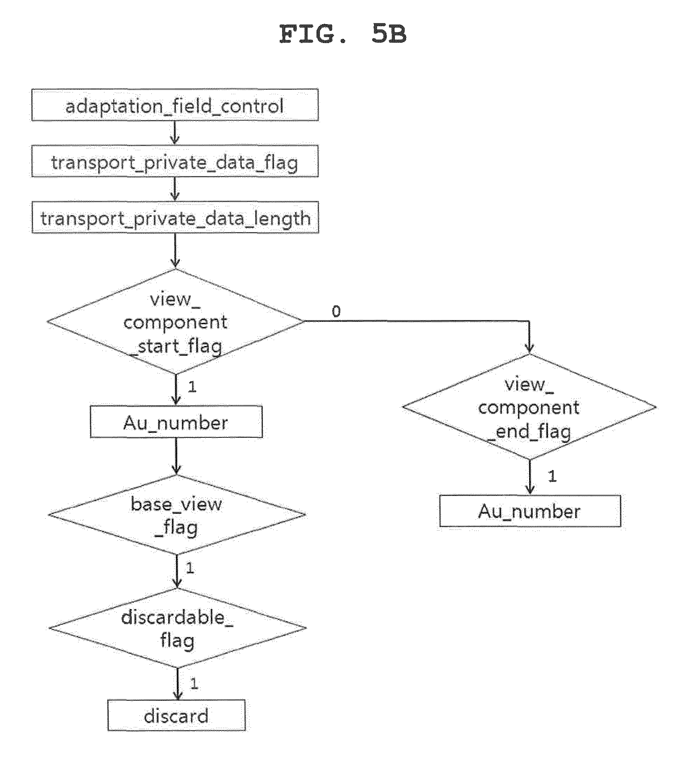

FIGS. 5a and 5b are flowcharts illustrating the process in which the discardable_pic_data is obtained to provide the trick play in a broadcast digital signal receiving method and a broadcast digital signal receiving method that are capable of displaying the three-dimensional image according to one embodiment of the present invention.

First, referring to FIG. 5a, a process is described in which the discardable_pic_data is processed to provide the 3D trick play in the 1-PID multiplex mode and the 2-PID multiplex mode

In order to provide the 3D trick play, two pictures that correspond to the base view and the dependent view, respectively, which make up the 3D image, have to be all in a discardable state. That is, the discardability information on the stereo view pair has to be provided in order to provide the 3D trick play.

To do this, the broadcast digital signal receiving apparatus capable of displaying the three-dimensional image obtains the discardability information on one pair of pictures, through processes described below.

The discardability information is provided through "adaptation field()" that is included in the transport packet. In order to obtain the discardability information on the pair of pictures that is included in the "adaptation field()," a process first proceeds in which a value of the "adaptation_field_control" that is included in the header information on the transport packet is determined. The value of the "adaptation_field_control" is '10' or '11,' the "adaptation field()" is present. The value of the "adaptation_field_control" is '10' or '11,' the information on the discardability picture is included in the "private_data_byte" field.

If, as described above, the value of the "adaptation_field_control" is '10' or '11,' a process proceeds in which the value of the "transport_private_data_flag" field is determined.

At this point, if a value of the "transport_private_data_flag" is '1,' a "private_data_byte" field that is one or byte in length is present in the "adaptation_field()."

Then, if a value of the "transport_private_data_flag" is '0,' the "private_data_byte" field is not present in the "adaptation_field()."

In this manner, if the value of the "transport_private_data_flag" that is included in the "adaptation_field()" is '1,' it is determined that the "private_data_byte" field is present in the "adaptation_field()." Therefore, if the value of the "transport_private_data_flag" is '1,' it is determined that the corresponding transport packet includes the information on the discardable picture.

On the other hand, the 'discardable_pic_data,' which is the information on the discardable picture is positioned in the "private_data_byte" field. That is, the "private_data_byte" includes the detailed information on the discardable picture.

Next, if it is determined that the value of "transport_private_data_flag" is '1,' a process proceeds in which how many bytes the "private_data_byte" field occupies is determined through the "transport_private_data_length."

When the process is ended in which how many bytes the "private_data_byte" field occupies is determined through the "transport_private_data_length," a process proceeds in which it is determined whether or not the value of the "view_component_start_flag" is '1.'

If the value of the "view_component_start_flag" is '1,' it is recognized that the current transport packet is the first transport packet, among the multiple transport packets that make up an arbitrary view component.

On the other hand, if the value of the "view_component_start_flag" is '1,' a process proceeds in which the number of the access unit in which the current transport packet is included is determined through an "AU_number" field.

Next, a process proceeds in which, by determining the value of the "discardable_pair_flag," it is determined whether or not two pictures that correspond to the base and dependent views which correspond to the access unit in which the current transport packet is included are the discardable pictures.

That is, when the value of the "discardable_pair_flag" is '1' in in the 1-PID multiplex mode, it is determined that the two pictures that correspond to a pair of the base view and the dependent view that are realized through one access unit in which the current transport packet is included are the discardable pictures.

In addition, in the 1-PID multiplex mode, it is indicated that, when the value of the "discardable_pair_flag" is '1,' the first picture that is realized through the access unit in which the current transport packet is included, and the second picture that is realized through the different access unit that has the same number as the access unit in which the current transport packet is included are all the discardable pictures. At this point, the first picture and the second picture are pictures that make up a stereo view pair.

Therefore, if the value of the "discardable_pair_flag" is '1,' the two pictures that correspond to the stereo view pair that corresponds to a current stream at the time of the 3D trick play are all the discardable in the receiving apparatus. In addition, if the value of the "discardable_pair_flag" is '0,' an image that corresponds to the stereo view pair that corresponds to the current stream at the time of the 3D trick play is reproduced in the receiving apparatus.

On the other hand, if the value of the "view_component_start_flag" is '0,' the current transport packet is not the first transport packet, among the multiple transport packets that make up the arbitrary view component, in which case a process proceeds that through the "view_component_end_flag," it is determined whether or not the corresponding transport packet is the last transport packet among the multiple transport packets that make up the arbitrary view component frame.

That is, if the value of the "view_component_end_flag" is '1,' the transport packet in which the "view_component_end_flag" having the value of '1' is included is the last transport packet of the arbitrary view component frame in which the transport packet in which the "view_component_end_flag" having the value of '1' is included is included. In the other cases, the value of the "view_component_end_flag" is set to '0.'

Then, if the value of the "view_component_end_flag" is '1,' a process proceeds in which the "Au_number" is determined to identify the number of the access unit that corresponds to the corresponding transport packet.

In this manner, the 3D trick play is realized using the "discardable_pair_flag" in the receiving apparatus. Furthermore, in the receiving apparatus, only the transport packet that corresponds to the AU that is wanted in the trick play process is selected by identifying the starting point and the ending point of the access unit using the "view_component_start_flag" and the "view_component_end_flag."

The process is described above in which the discardability information is determined to provide the 3D trick play that is performed on a 3D stereo view pair, using the "discardable_pair_flag" in the receiving apparatus.

On the other hand, although the transport streams that correspond to the base and dependent views, respectively, are all received in the receiving apparatus, a 2D trick play is provided according to user's selection and a situation of the receiving apparatus.

Referring to FIG. 5b, a process is described below in which the 2D trick play is provided in the receiving apparatus. Descriptions of the same processes as those provided referring to FIG. 5a are omitted, and the descriptions provided referring to FIG. 5a is substituted.

After the processes in which the "view_component_start_flag" field, the "AU_number" field, and the "discardable_pair_plag" field are determined are ended, a process proceeds in which a value of a "base_view)_flag" field is determined.

The "base_view_flag" indicates whether a view that includes a current transport packet is the base view or the dependent view. That is, if the value of the "base_view_flag" is '1,' a picture that corresponds to the transport packet in which the "base_view_flag" is included is the base view. Then, if the value of the "base_view_flag" is '0,' a picture that corresponds to the transport packet in which the "base_view_flag" having the value of '0' is included is the dependent view.

That is, in the case of reproducing a 2D image, an image corresponding to the base view is reproduced in the receiving apparatus, and thus it is determined whether or not a current transport packet is the transport packet that corresponds to the base view.

Therefore, if the current transport packet corresponds to the base view, a process in which a value of a "discardable_flag" field is determined proceeds in the receiving apparatus.

If the values of the nal_ref_idc fields of all nal slices that are included within a picture that corresponds to a current stream are all '0,' the "discardable_flag" has the value of '1.' That is, if the values of the nal_ref_idc fields of all the nal slices that make up the picture that corresponds to the transport packet in which the "discardable_flag" is included are '0,' the picture is discardable, and therefore the value of the "discardable_flag" determining whether or not the picture is discardable is '1.'

Therefore, the receiving apparatus determines that the picture that corresponds to the transport packet in which the "discardable_flag" has the value of '1' is the discardable picture.

On the other hand, the "base_view_flag" field (or view_component_ID) is significant in the 1-PID multiplex mode in which the base view and the dependent view make up one access unit. That is, because the base view and the dependent view are identifiable through a PID value included in a transport header in a 2-PID multiplex mode (or N-PID multiplex mode), the "base_view_flag" may not be included in the 2-PID multiplex mode.

Therefore, in the 2-PID multiplex mode, the receiving apparatus does not determine the "base_view_flag," and determines only the "discardable flag."

As described above, according to the present invention, the discardability of the pictures that correspond to the base and dependent views, respectively, is determined at the transport stream level.

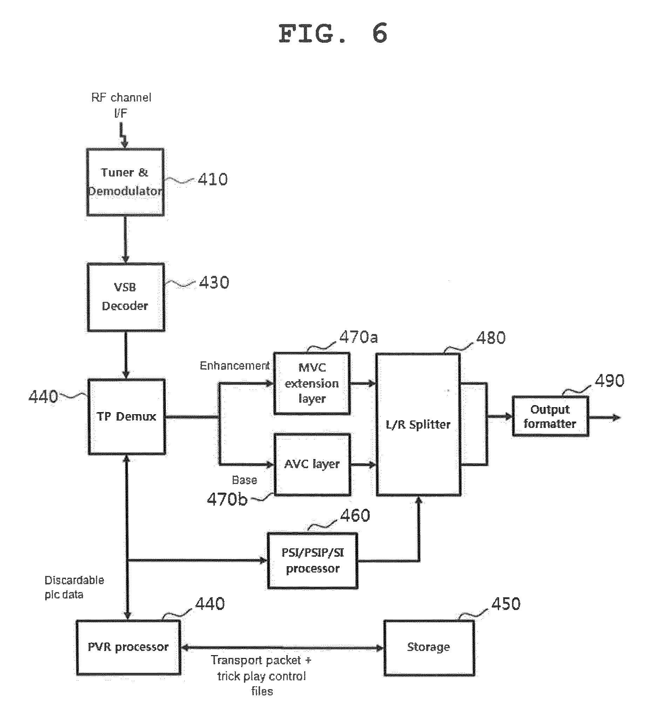

The broadcast digital signal receiving apparatus capable of displaying the three-dimensional image that provides the 2D or 3D trick play described above is described in detail below referring to the accompanying drawings. FIG. 6 is a block diagram for describing the broadcasts digital signal receiving apparatus capable of displaying the three-dimensional image according to one embodiment of the present invention.

The broadcast digital signal receiving apparatus includes a tuner and demodulator 410, a VSB decoder 420, a demux 430, a PVR processor 440, a storage unit 450, a PSI or PSIP/SI processor 460, a AVC layer 470a, an MVC extension layer 470b, an L/R Splitter 480, and an output formatter 490 (3D video processor).

In addition, although not illustrated, the broadcast digital signal receiving apparatus may include an image output unit for outputting an image that is at a corresponding point in time. The image output unit controls images for each point in time. The multiple image output units may be provided and be configured in such a manner that the left view image and the right view image are separately output.

The tuner and demodulator 410 receives a broadcast digital signal, demodulates the corresponding signal, corrects an error, and extracts a transport stream. As an example of a demultiplexer that performs filtering and parsing on the transport stream, the TP demux 430 is provided. The PSI/PSIP processor 460 extracts packet identifier (PID) information on a video stream from table information that is transferred from the dumux 430.

The AVC layer 470a is a decoder that decodes reference point-in-time video. The MVC extension layer 470b is a decoder that decodes extension point-in-time video.

A method of operating the receiving apparatus described above is described below.

The receiving apparatus extracts video stream PID from PMT and TVCT information that is parsed in the PSI/PSIP processor 460. The TP Demux 430 outputs the video stream using the corresponding video stream ID. When a video stream that is output corresponds to the reference point-in-time video (AVC), the demux 430 outputs the video stream to the AVC layer 470a. When the video stream that is output corresponds to the extension in-point-time video (MVC extension), the TP Demux 430 outputs the video stream to the MVC extension layer 470b.

The AVC layer 470a and the MVC extension layer 470b process video data and supplemental data that are included in the video streams which are received by the AVC layer 470a and the MVC extension layer 470b, respectively, and output the result of the processing to the L/R Splitter 480. Based on information extracted by the PSIP or PSI/SI processor 460, the L/R Splitter 480 and the output formatter 490 format the reference point-in-time video stream and the extension point-in-time video stream in accordance to stereoscopic display output and transmits the result of the formatting.

On the other hand, according to the present invention, after the TP demux 430 (or demultiplexer) ends filtering and parsing processing on the transport stream, the PVR process 440 processes the discardability information on the reference point-in-time stream and the extension point-in-time stream from the transport packets that make up the transport stream. On the other hand, the PSIP or PSI/SI processor 460 may perform the process in which processes the discardability information on the reference point-in-time stream and the extension point-in-time stream from the transport packets that make up the transport stream may be performed.

That is, the PVR processor 440 processes the "discardable_pic_data" as in the process described referring to FIGS. 5a and 5b. On the other hand, the discardability information that is processed by the PVR processor is stored in the storage unit 450 and is used as a reference if the trick play is realized on a recorded image.

That is, a file associated with the transport packet that is available for trick-play and with trick play control is stored in the storage unit 450. In this manner, the file associated with the transport packet and the trick play control is stored in the storage unit 450, and is used at any time when a control command to execute the file is applied to the trick play.

A configuration of the file that is stored in the storage unit 450, according to one embodiment, is described below. The broadcast digital signal receiving apparatus capable of displaying the three-dimensional image refers to a file configured as in [Table 1] that follows, in order to realize the trick play using the "discardable_pic_data()."

[Table 1]

| Field | Description |
|---|---|
| GOP number | GOP number means a series number of GOP and uses high-level bits in the AU_number field for the discardable_pic_data(). |
| GOP start address | GOP start address indicates a starting position of the corresponding GOP, and is information that indicates a physical address within a storage device in which the starting position of the GOP is stored. A GOP starting point in time is determined using a point in time at which low level 8 bits becomes 0 (or a point in time at which high-level 24 bits of the AU-number increases by 1). |
| GOP end address | GOP end address indicates an end position of the corresponding GOP. When uploading is performed in GOP units in a case of performing PVR trick play, the GOP end address indicates a physical address in which the last byte of the corresponding GOP is stored; |
| GOP size | GOP size indicates the number of pictures that are included in the GOP, which is obtained as a result of the receiving apparatus counting the number of pictures between GOP start and GOP end |
| Number of non-discardable picture (base) | Number of non-discardable picture (base) means the number of pictures included in the GOP, particularly of non-discardable pictures (or pictures used as a reference) in the base view component. |
| Number of non-discardable picture pairs | Number of non-discardable picture pairs means the number of non-discardable pairs in the picture included in the GOP and in the MVC view component pair. |
| for(i=0; i<K; i++){ | K means the number of non-discardable base pictures or the number of non-discardable picture pairs (non-discardable picture groups in a caser of multi-view), whichever is larger. |
| Number of stereo view | Number of stereo view is the number of stereo images that are configurable from a combination of MVC view components. A value of the number of stereo view is 1. |
| for(j=0; number of stereo views; j++){ | |
| Stereo View ID | Stereo View ID indicates an ID of a stereo view ID, and indicates an identifier of the combination of MVC view components that make up the stereo, among the multi-view components, in a case of the multi-view, not the stereo. |
| Left view flag | Left view flag indicates whether the base view is the left view or the right view. |
| I picture flag | I picture flag indicates whether or not the base view is an I picture. |
| MVC I picture flag | MVC I picture flag indicates whether MVC view pairs are all the I pictures. |
| Component ID for base view | Component ID for base view makes the base view component identifiable (uses view_id of MVC SPS). |
| Base view start address | Base view start address indicates a physical position in which a first byte is stored. |

(continued)

| Field | Description |
|---|---|
| Base view end address | Base view end address indicates a physical position in which a last byte is stored. |
| Component ID for dependent view | Dependent view start address is an identifier of the dependent view component (uses the view_id of the MVC SPS). |
| Dependent view start address | Dependent view end address indicates a physical position in which a first byte of an enhancement view is stored. |
| Dependent view end address | Dependent view end address indicates a physical position in which a last byte of the enhancement view is stored. |

The file in the receiving apparatus for realizing the trick play using the "discardable_pic_data()" is configured as in [Table 1] described above. On the other hand, [Table 1] described above is applied in the same manner also when an image for realizing the 3D image is configured from the multi view, not the stereo view.

The syntax structure for realizing the trick play that is performed on the view components, which is configured from the multi views are described in detail below referring to the accompanying drawings.

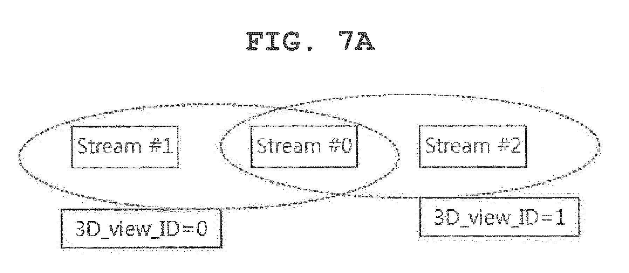

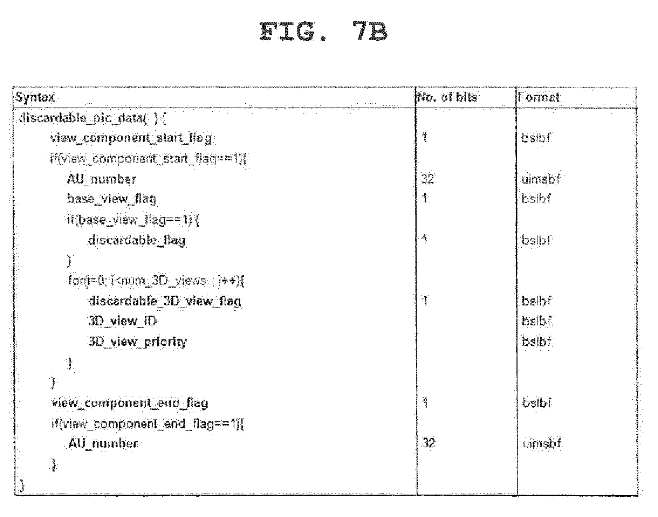

The syntax structure for providing the discardability information in stereo MVC that is configured from two streams is described above referring to FIGS .4a, 4b, and 4c. The syntax structure in which if the stereo MVC is configured from two or more MVC streams, that is, if one or more dependent view component are present, the discardability information on this is provided is described below referring to the accompanying drawings. FIGS. 7a and 7b are diagrams for describing a method in which information on the discardable picture is provided in a multi-view type three-dimensional image in the broadcast digital signal receiving method and the broadcast digital signal receiving apparatus that are capable of displaying the three-dimensional image according to one embodiment of the present invention.

First, referring to FIG. 7a, if the two or more MVC streams are present, that is, if at least two dependent view components are present (Stream #1 and Stream #2), the base view component (Stream #0) realizes the three-dimensional image, together with the first dependent view component (Stream #1) or a second dependent view component (Stream #2).

The syntax structure illustrated in FIG. 7b is available for a method in which the discardability information is provided to the stereo MVC that is configured from the two or more streams.

On the other hand, the syntax structure described referring to FIGS. 4a and 4b is applied also in a case where the stereo MVC is configured from the two or more streams, and therefore, only the syntax structure for the "discardable_pic_data()" is described in detail.

The "discardable_pic_data()" field includes at least one field among multiple fields, as illustrated in FIG. 7b.

First, "view_component_start_flag" indicates whether the transport packet in which the "view_component_start_flag," is included, that is, the current transport packet, is the first transport packet of a corresponding view component frame that includes the current transport packet. That is, the value of the "view_component_start_flag" is '1,' the transport packet in which the "view_component_start_flag" that has the value of '1' is included is the first transport packet of the view component frame that includes the transport packet in which the "view_component_start_flag" that has the value of '1' is included.

If a value of the "view_component_start_flag" is '0,' the transport packet in which the "view_component_start_flag" that has a value of '0' is included is not the first transport packet of the arbitrary view component frame that includes the transport packet in which the "view_component_start_flag" that has the value of '0' is included.

In this manner, through a "view_component_start_flag" field, the "discardable_pic_data()" provides information on which of the multiple transport packets that make up the arbitrary view component frame is the first transport packet.

On the other hand, the "discardable_pic_data()" provides discardability information on the view component frame that includes the first transport packet and on a stereo view pair, using the transport packet in which the "view_component_start_flag" is the value of '1,' that is, the first transport packet among the multiple transport packets that make up an arbitrary view component frame.

The "AU_number" field, a different field representing the "discardable_pic_data()," is a field that indicates the number of the access unit. The "AU_number" is expressed by a concatenation of the GOP series number (high-level 24 bits) and the display order (or decoding order) (low-level 8 bits) within the GOP.

Next, the "base_view_flag" is a field that indicates whether a view that includes the current transport packet is the base view or the dependent view. That is, if the value of the "base_view_flag" is '1,' the picture that corresponds to the transport packet in which the "base_view_flag" is included is the base view. Then, if the value of the "base_view_flag" is '0,' a picture that corresponds to the transport packet in which the "base_view_flag" having the value of '0' is included is the dependent view.

Next, if values of nal_ref_idc fields of all nal slices that are included within a picture that corresponds to the current stream are all '0,' "discardable_flag" has the value of '1.'

The "discardable_flag" indicates whether or not the picture corresponding to the current stream is discardable.

That is, if the values of the nal_ref_idc fields of all the nal slices that make up the picture that corresponds to the transport packet in which the "discardable_flag" is included are '0,' the picture is discardable, and therefore the value of the "discardable_flag" determining whether or not the picture is discardable is '1.' On the other hand, even though the value of the nal_ref_idc field of one, among the slices that are included within the picture, is '1,' the "discardable_flag" has the value of '0.'

On the other hand, a "base_view_flag" field (or view_component_ID) described above, is significant in the 1-PID multiplex mode in which the base view and the dependent view make up one access unit. That is, because the base view and the dependent view are identifiable through a PID value included in a transport header in a 2-PID multiplex mode (or N-PID multiplex mode), the "base_view_flag" may not be included in the 2-PID multiplex mode.

Next, the "num_3D_views" indicates the number of 3D views in each of which a corresponding stream element is included as an element, using the same as that of a Multiview_descriptor field, which is signaled at the system level. Furthermore, the "num_3D_views" has a value that varies from one stream element to another.

Next, the "discardable_3D_view_flag" is a field that indicates whether or not a discardable. view is present among the 3D views, in each of which the current transport packet is included. If the discardable 3D view is present among the 3D views, in each of which the current transport packet is included, the "discardable_3D_view_flag" has the value of '1,' and if not, has the value of '0.'

Next, a "3D_view_ID" field is a field that makes the 3D views identifiable at a program level, using the same as that of the Multiview_descriptor field, which is signaled at the system level.

Next, a "3D_view_priority" field is a field that indicates priority of the 3D view that is provided by a corresponding multi-view program, using the same as that of the Multiview_descriptor field, which is signaled at the system level.

Next, an "AU_number" field is a field that indicates the number of the access unit in which the corresponding transport packet is included. In a case of the multi-view, the access unit means a group of all the view components that are temporally contained at the same time. That is, the access unit means an MVC picture that includes all the N views that are contained at the same time, and the AU_number is a field for identifying the MVC picture. Likewise, the "AU_number" is expressed by a concatenation of the GOP series number and the display order within the GOP.

Next, "view_component_end_flag" indicates whether the transport packet in which the "view_component_end_flag" is included, that is, a current transport packet, is the last transport packet of the corresponding view component frame that includes the current transport packet. That is, if the value of the "view_component_end_flag" is '1,' the transport packet in which the "view_component_end_flag" having the value of '1' is included is the last transport packet of the arbitrary view component frame in which the transport packet in which the "view_component_end_flag" having the value of '1' is included is included. In the other cases, the value of the "view_component_end_flag" is set to '0.'

Referring to the accompanying drawings, a process is described below in which the disdable_pic_data is processed using the syntax structure for the multi-view type three-dimensional image that is defined as in FIGS. 4a, 4b, and 7b.

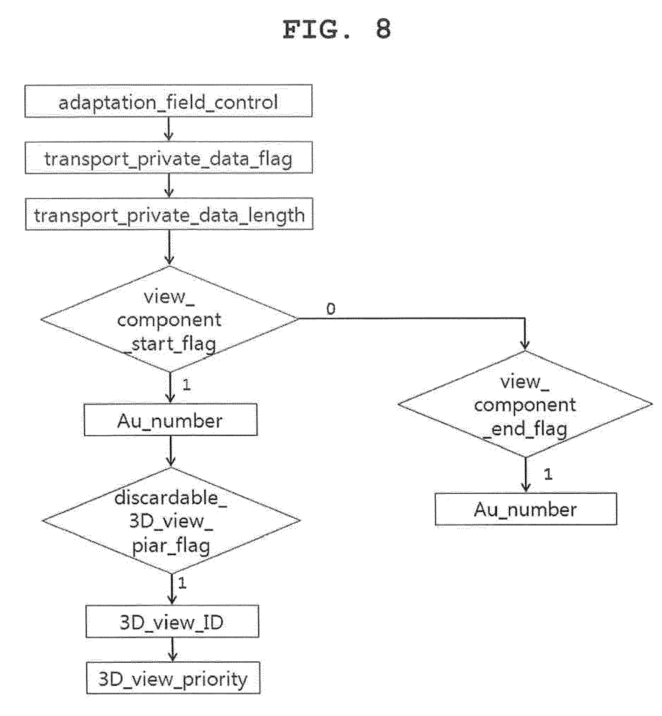

FIG. 8 is a flow chart illustrating a process in which the discardable_pic_data is obtained to provide the trick play that is performed on the 3 D view that is configured from two or more MVC streams in the broadcast digital signal receiving method and the broadcast digital signal receiving apparatus that are capable of displaying the three-dimensional image according to one embodiment of the present invention.

In order to provide the D trick play, two pictures that correspond to the base view and the dependent view, respectively, that make up the 3D image have to be in a discardable state. Furthermore, the receiving apparatus needs to determine which of at least two 3D views is discardable in the 3D view that is configured from two or more MVC streams.

To do this, the broadcast digital signal receiving apparatus capable of displaying the three-dimensional image obtains the discardability information on at least two 3D views, through processes described below.

The discardability information is provided through the "adaptation field()" that is included in the transport packet. In order to obtain the discardability information on the pair of pictures that is included in the "adaptation field()," the process first proceeds in which the value of the "adaptation_field_control" that is included in the header information on the transport packet is determined. The value of the "adaptation_field_control" is '10' or '11,' the "adaptation field()" is present. The value of the "adaptation_field_control" is '10' or '11,' the information on the discardability picture is included in the "private_data_byte" field.

In this manner, the value of the "adaptation_field_control" is '10' or '11,' a process proceeds in which a value of a "transport_private_data_flag" field is determined.

At this point, if the "transport_private_data_flag" is '1,' a "private_data_byte" field that is one or byte in length is present in the "adaptation_field()."

Then, if a value of the "transport_private_data_flag" is '0,' the "private_data_byte" field is not present in the "adaptation_field()."

In this manner, if the value of the "transport_private_data_flag" that is included in the "adaptation_field()" is '1,' it is determined that the "private_data_byte" field is present in the "adaptation_field()." Therefore, if the value of the "transport_private_data_flag" is '1,' it is determined that the corresponding transport packet includes the information on the discardable picture.

On the other hand, the 'discardable_pic_data,' which is the information on the discardable picture is positioned in the "private_data_byte" field. That is, the "private_data_byte" includes the detailed information on the discardable picture.

Next, if it is determined that the value of "transport_private_data_flag" is '1,' a process proceeds in which how many bytes the "private_data_byte" field occupies is determined through the "transport_private_data_length."

When the process is ended in which how many bytes the "private_data_byte" field occupies is determined through the "transport_private_data_length," a process proceeds in which it is determined whether or not the value of the "view_component_start_flag" is '1.'

If the value of the "view_component_start_flag" is '1,' it is recognized that the current transport packet is the first transport packet, among the multiple transport packets that make up an arbitrary view component.

On the other hand, if the value of the "view_component_start_flag" is '1,' a process proceeds in which the number of the access unit in which the current transport packet is included is determined through an "AU_number" field.

Next, a process proceeds in which, by determining a value of the "discardable_3D_view_flag," it is determined whether or not the discardable view is present among the 3D views, in each of which the current transport packet is included.

Therefore, if a value of the "discardable_3D_view_flag" is '1,' it is possible to discard the 3D view in which the current transport packet is included, at the time of the 3D trick play in the receiving apparatus. In addition, in the receiving apparatus, the 3D_view is identified among the multiple 3D views, using the "3D_view_ID" field and the "3D_view_priority" field, and if the multiple 3D views are all discardable, it is determined which of the 3D views is discarded.

On the other hand, if the value of the "view_component_start_flag" is '0,' the current transport packet is not the first transport packet, among the multiple transport packets that make up the arbitrary view component, in which case a process proceeds that through the "view_component_end_flag," it is determined whether or not the corresponding transport packet is the last transport packet among the multiple transport packets that make up the arbitrary view component frame.

That is, if the value of the "view_component_end_flag" is '1,' the transport packet in which the "view_component_end_flag" having the value of '1' is included is the last transport packet of the arbitrary view component frame in which the transport packet in which the "view_component_end_flag" having the value of '1' is included is included. In the other cases, the value of the "view_component_end_flag" is set to '0.'

Then, if the value of the "view_component_end_flag" is '1,' a process proceeds in which the "Au_number" is determined to identify the number of the access unit that corresponds to the corresponding transport packet.

In this manner, in the receiving apparatus, the 3D trick play that is performed on at least two 3D views is realized using the "discardable_3D_view_flag." Furthermore, in the receiving apparatus, only the transport packet that corresponds to the AU that is wanted in the trick play process is selected by identifying the starting point and the ending point of the access unit using the "view_component_start_flag" and the "view_component_end_flag."

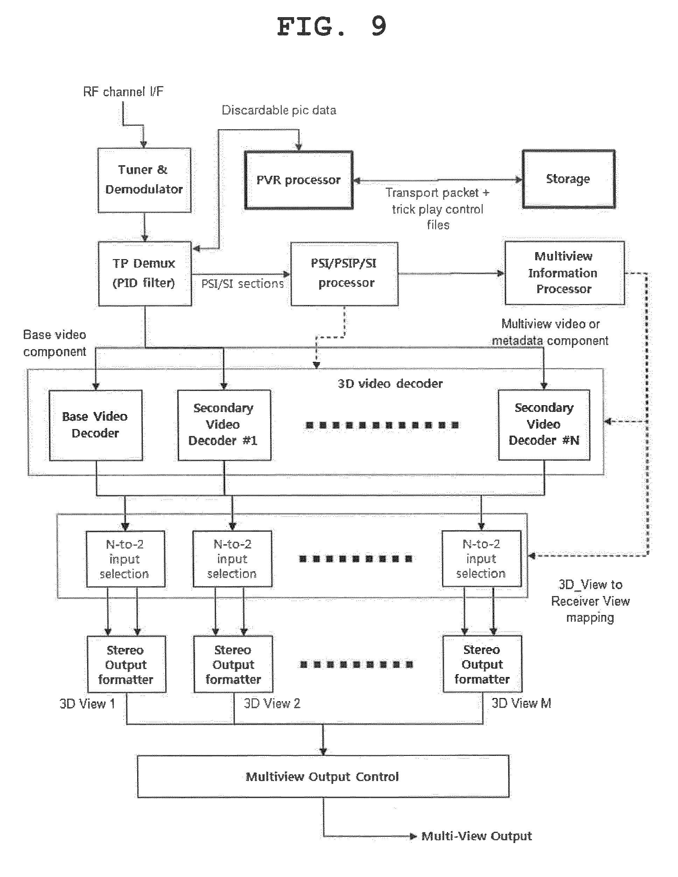

On the other hand, as illustrated in FIGS. 7a, 7b, and 8, the broadcast digital signal receiving apparatus capable of displaying the three-dimensional image is realized as illustrated in FIG. 9 in order to provide the 3D view that is configured from two or more MVC streams.

Referring to FIG. 9, in order to decode the multiple MVC streams, the receiving apparatus may include multiple secondary video decoders for decoding the multiple MVC streams, respectively, in addition to a base video decoder.

As described above, in the broadcast digital signal receiving method and broadcast digital signal receiving that are capable of displaying the three-dimensional image according to one embodiment of the present invention, if the trick play is performed on stereo broadcast content, it is determined whether or not the corresponding transport packet is discardable, by referring to information on the "discardable_pair_flag" field or the "discardable_3D_view_flag" field that is positioned in the header of each transport packet.

In addition, in the broadcast digital signal receiving method and broadcast digital signal receiving that are capable of displaying the three-dimensional image according to one embodiment of the present invention, if the stereo broadcast content is two-dimensionally output only at the time of the trick play, it is determined through the "base_view_flag" whether or not the corresponding frame corresponds to the base view. If it is determined through the "base_view_flag" that the corresponding frame corresponds to the base view, it is determined whether or not the corresponding transport packet is discardable, by referring to information on a "discardable_flag" field.

In addition, in the broadcast digital signal receiving method and broadcast digital signal receiving that are capable of displaying the three-dimensional image according to one embodiment of the present invention, the 2D or 3D trick play is provided through a first process, a second process, and a third process. In the first process, while recording through the PVR a 3D broadcast stream that is received, it is determined upstream whether or not each transport packet is discardable,. In the second process, a trick play access time available for each GOP, and identification numbers of and distribution of the discardable and non-discardable pictures are recognized based on information (which is included within the discardable_pic_data() or is received separately) on sequence start (GOP start), and then a file or a table in which such information is comprehensively organized is stored (refer to [Table 1] for a file structure). In the third process, if a user enables a trick play function when reproducing the stream stored in the PVR, the trick play is realized using the file stored in the second process.

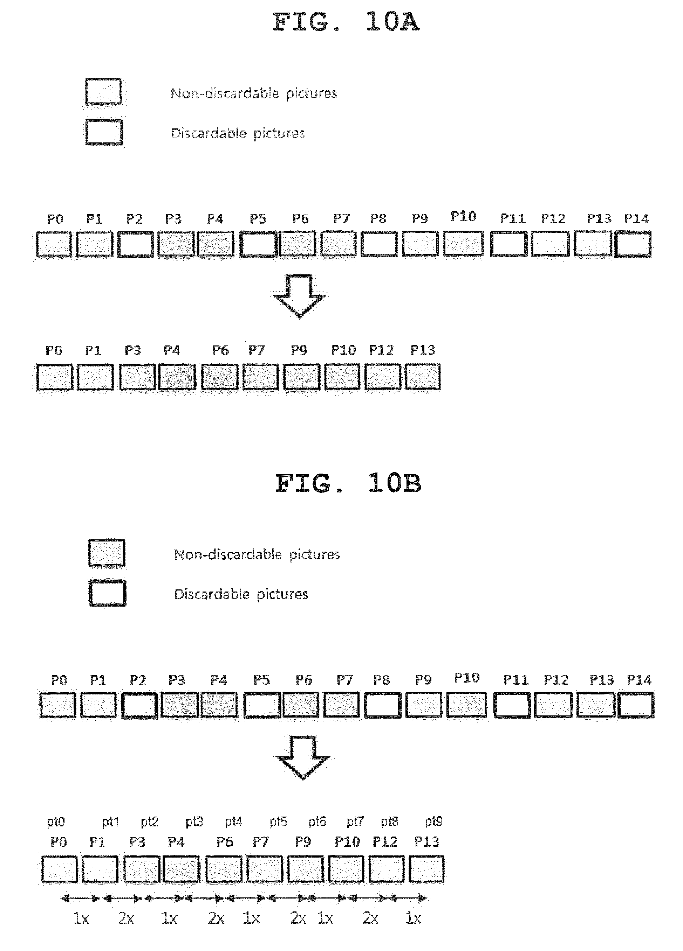

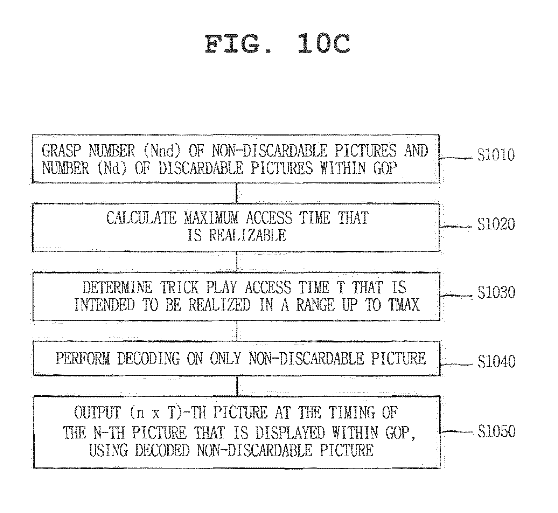

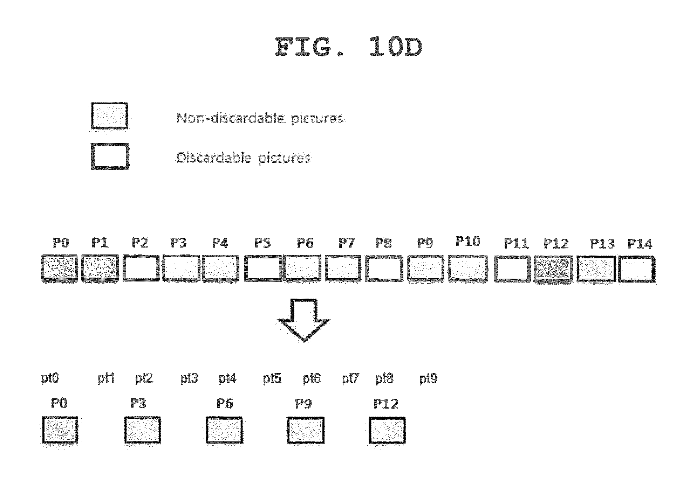

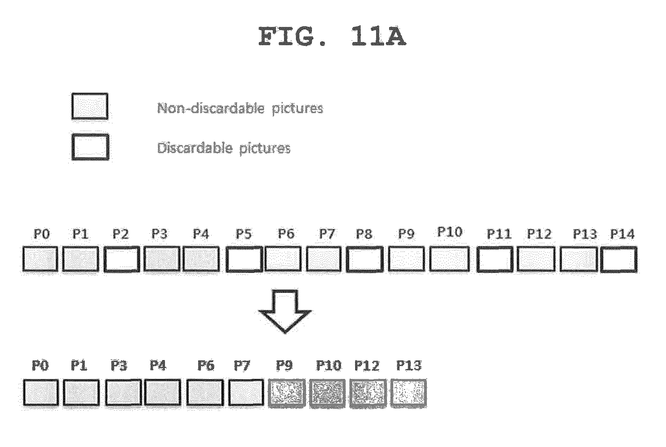

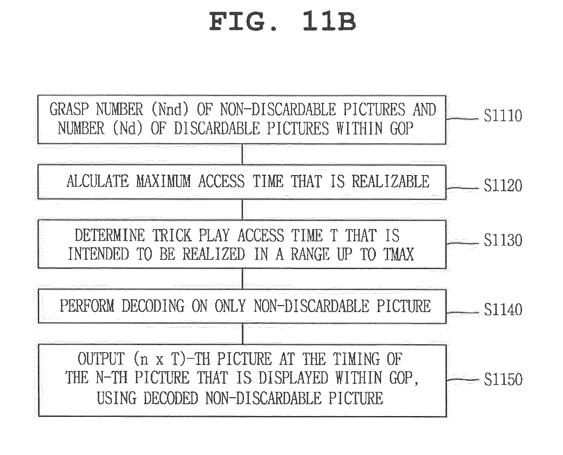

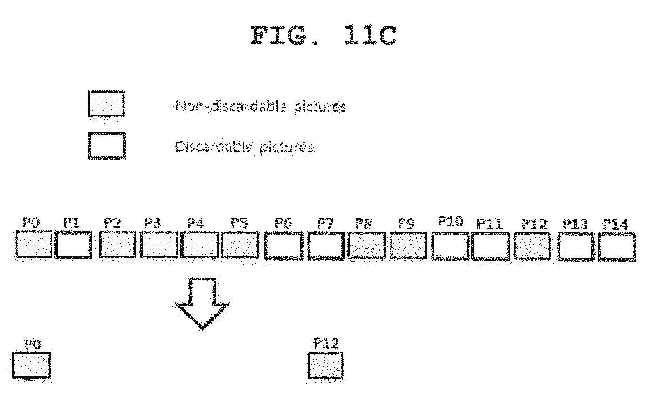

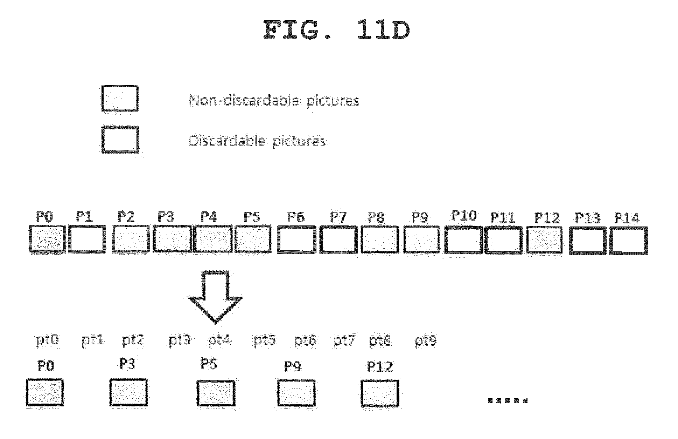

A method in which a reproduction speed is controlled in a trick play mode is described in detail below referring to the accompanying drawings. FIGS. 10a, 10b, 10c and 10d and FIGS. 11a, 11b, 11c and 11d are diagrams for describing the method in which reproduction of the image is controlled in the trick play mode in the broadcast digital signal receiving method and broadcast digital signal receiving that are capable of displaying the three-dimensional image according to one embodiment of the present invention.

For description convenience, regardless of whether the picture is for the 2D trick play or for the 3D trick play, the picture that is skippable at the time of the trick play is referred to as the 'discardable picture' and the picture that is non-skippable is referred to as the "non-discardable picture.'

First, if the non-discardable pictures (or discardable pictures) are arranged periodically, operation of the receiving apparatus is described referring to FIGS. 10a, 10b, 10c, and 10d.

As illustrated in FIG. 10a, if the trick play is performed in an image that is configured from pictures P0, P1, P2, P3, P4, P5, P6, P7, P8, P9, P10, P11, P12, P13, and P14, the receiving apparatus skips the pictures P2, P5, P8, P11, and P14 that correspond to the discardable pictures, and reproduces the pictures P0, P1, P3, P4, P6, P7, P9, P10, p12, and P13 that correspond to the non-discardable pictures in order to provide the trick play.

However, when the trick play is performed on the pictures P0, P1, P3, P4, P6, P7, P9, P10, P12, and P13, the pictures P0 to P1 are reproduced at a 1 x speed and the pictures P1 to P3 are reproduced at a 2 x speed.

Therefore, a proposal for uniformly maintaining the speed at which the non-discardable pictures are reproduced is possible with the receiving apparatus according to the present invention.

To do this, a description is provided referring to the flow chart in FIG. 10c. In the receiving apparatus, a process proceeds in which the number (Nnd) of the non-discardable picture and the number (Nd) of the discardable pictures within the GOP are grasped to uniformly maintain the speed at which the non-discardable pictures are reproduced (S1010).

In this manner, if the number (Nnd) of the non-discardable pictures and the number (Nd) of the discardable pictures are grasped, a process proceeds in which a maximum access time is calculated (S1020). At this point, the maximum access time is calculated according to [Formula 1] described below.

[Formula 1]

$$\text{Maximum access time } T_{max} = (Nnd + Nd)/Nnd$$

Next, when the maximum access time is determined, a process proceeds in which trick play access time T that is intended to be realized in a range up to $T_{max}$ is determined (S1030).

Next, in the receiving apparatus, a process proceeds in which decoding is performed on only the non-discardable picture (S1040). Next, in the receiving apparatus, a process proceeds in which the (n x T)-th picture is output at the timing of the n-th picture that is displayed within the GOP, using the decoded non-discardable picture (S1050).

Therefore, in the receiving apparatus according to the present invention, as illustrated in FIG. 10d, if nt x T is an integer at current timing nt, the corresponding non-discardable picture (for example, the picture P2) is decoded and output. Then, in the receiving apparatus, if nt x T is not an integer at the current timing nt, the corresponding non-discardable picture (for example, the picture P4) is decoded without being output. Therefore, in the broadcast digital signal receiving method and the broadcast digital signal receiving apparatus that are capable of displaying the three-dimensional image according to the present invention, the access time at which natural reproducing is available at the time of the trick display is provided using a frame interpolation technique and the like at the corresponding timing.

Next, if the non-discardable pictures (or discardable pictures) are arranged non-periodically, the operation of the receiving apparatus is described referring to FIGS. 11a, 11b, 11c, and 11d.

As illustrated in FIG. 11a, if the trick play is performed in an image that is configured from the pictures P0, P1, P2, P3, P4, P5, P6, P7, P8, P9, P10, P11, P12, P13, and P14, the receiving apparatus skips the pictures P1, P6, P7, P10, P11, P13, and P14 that correspond to the discardable pictures, and reproduces the pictures P0, P2, P3, P4, P5, P8, P9, and P12 that correspond to the non-discardable pictures in order to provide the trick play.

However, when the trick play is performed on the pictures P0, P2, P3, P4, P5, P8, P9, and P12 that correspond to the non-discardable pictures, there is a difference between the access time at which the pictures P0. to P3 are reproduced and the access time at which the pictures P2 to P3 are reproduced.

Therefore, a proposal for uniformly maintaining the speed at which the non-discardable pictures that are non-periodically arrange are reproduced is possible with the receiving apparatus according to the present invention.

Referring to a flow chart illustrated in FIG. 11b, to do this in the receiving apparatus, a process proceeds in which the number (Nnd) of the non-discardable pictures and the number (Nd) of the discardable pictures within the GOP are grasped (S1110).

Next, when the number (Nnd) of the non-discardable pictures and the number (Nd) of the discardable pictures are grasped, a process proceeds in which the maximum access time that is available for the non-discardable picture is calculated (S1120).

At this point, the maximum access time is calculated according to [Formula 2] described below.

[Formula 2]

$$\text{Maximum access time } Tmax = (Nnd + Nd)/Nnd$$

Next, in the receiving apparatus, a process proceeds in which the trick play access time T that is intended to be realized in a range up to Tmax is determined (S1130).

Next, in the receiving apparatus, a process proceeds in which the decoding is performed on only the non-discardable picture (S1140).

Next, in the receiving apparatus, a process proceeds in which the (n x T)-th picture is output at the timing of the n-th picture that is displayed within the GOP (S1150).

Therefore, as illustrated in FIG. 11c, if the trick display is provided at a 1.9 x speed, the pictures P0 and P12 (refer to FIG. 11c) are output.

On the other hand, if the (nt x T)-th picture is already decoded at the current timing nt, when the decoded (nt x T)-th picture is output and the (nt $\times$ T)-th picture is not yet decoded at the current timing nt, a picture that is closest to the (nt x T)-th picture in terms of timing, among the already-decoded pictures, is output.

The process described referring to FIG. 11b is further described in detail referring to FIG. 11d. In the receiving apparatus, the number of the non-discardable pictures and the number of the discardable pictures are grasped from the number of all the pictures included in the GOP (14 MVC view pairs) (Nnd = 9, and N = 7). Next, in the receiving apparatus, the maximum access time Tmax that is realizable is calculated (Tmax = 15/8).

Then, in the receiving apparatus, the trick play access time that is intended to be realized in the range up to Tmax is set (for example, T = 1.5).

In this case, in the receiving apparatus, a list of the access time that is realizable using a UI is displayed, and the access time that is selected by the user is set. In addition, the receiving apparatus outputs only a choice 'fast forward' is output. When the user selects the choice, the receiving apparatus arbitrarily determines the access time in the range up to Tmax.

Next, in the receiving apparatus, the non-discardable pictures P0, P2, P3, P4, P5, P8, P9, and P12 are decoded.

Then, in the receiving apparatus, the picture P0 is output that corresponds to presentation time 0 (pt0), and the picture P3 is output that corresponds to presentation time 2 (pt2). Next, because the picture P6 is not decoded that corresponds to presentation time 4 (pt4), the picture P5 that is closest in terms of output time, among the existing decoded pictures is output at the presentation time 4. Next, in the receiving apparatus, the picture P9 is output that corresponds to presentation time 6 (pt6), and the picture P12 is output that corresponds to the already-decoded picture P12. The picture P12, after decoded, is present in a waiting state until presentation time 8.

In addition, the discardable/ non-discardable picture described above is skippable in the trick play process if in the 3D trick play mode, two view components within the same AU are all discardable. In addition, in the 2D trick play mode, the discardable/the non-discardable picture described above is realized considering only the discardability/ non-discardability property of the base view component.

As described above, in the broadcast digital signal receiving method and the broadcast digital signal receiving apparatus that are capable of displaying the three-dimensional image according to the present invention, the access time at which the natural reproducing is available between the non-periodically arranged pictures at the time of the trick display is provided.

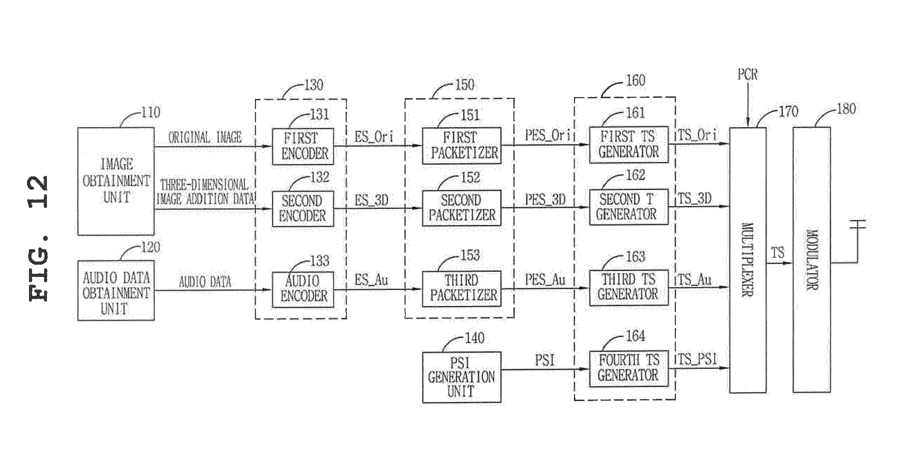

Referring to the accompanying drawings, a process is described in detail below in which data is processed by a transmitting apparatus for transmitting the broadcast digital signal. FIG. 12 is a block diagram for describing the process in which data is processed by the transmitting apparatus for transmitting the broadcast digital signal.

As illustrated in FIG. 12, a three-dimensional broadcast digital signal transmitting apparatus that uses three-dimensional image addition data, according to the present invention, includes an image obtainment unit 110, an audio data obtainment unit 120, an encoder 130, a program-specific information generation unit 140, a packetizer 150, a transmission stream (TS) generation unit 160, a multiplexer 170, and a modulator 180. The image obtainment unit 110 obtains an original image and three-dimensional addition data. The audio data obtainment unit 120 obtains audio data. The original image and the three-dimensional image addition data that are obtained by the image obtainment unit 100, and the audio data obtained by the audio data obtainment unit 120 are input into the encoder 130. The encoder 130 encodes the original image and the three-dimensional image addition data, and the audio data into a format suitable for digital transmission. The program-specific information generation unit 140 generates program-specific information (PSI) for distinguishing pieces of information. Base streams (ES) that results from the encoding by the encoder 130 are input into the packetizer 150. The packetizer 150 packets the base streams (ES) and generates base stream packets (PES). The base stream packets (PES) from the packetizer 150 and the program-specific information (PSI) from the program-specific information unit 140 are input into the transmission stream (TS) generation unit 160. The transmission stream (TS) generation unit 160 generates transmission streams TS. The transmission streams TS are input from the transmission stream generation unit 160 into the multiplexer 170. The multiplexer 170 multiplexes the transmission streams TS into one transmission stream TS. The modulator 180 modulates the transmission stream TS that results from the multiplexing by the multiplexer 170.

The image obtainment unit 110 obtains an image at one point in time for generating the original image, an image at another point in time for generating the three-dimensional image addition data, and any one, among disparity information and depth information.

At this point, an image at one point in time for generating the original image obtained by the image obtainment unit 110 is an image that serves as one reference against which an image at another point in time is compared. An image at another point in time for generating the three-dimensional image addition data obtained by the image obtainment unit 110 is a multi-view image at one point in time different in the point in time from the original image or a multi-view image at many points in time different in the point in time from the original image.

The disparity information for generating the three-dimensional image addition data is information on a distance between two points, which indicates the same position of an object although an image of the object is captured at different points in point, when a multi-view image, or one image at one point in time and two images at another point in view are projected into one image. The depth information is information on perspective that is known by obtaining an image at one point in time and an image at a different point in time of the same object at a predetermined distance.

The encoder 130 includes a first encoder 131, a second encoder 132, and an audio encoder 133. An original image at a reference point in time is input from the image obtainment unit 110 into the first encoder 131. The first encoder 131 encodes the original image. Three-dimensional image addition data is input from the image obtainment unit 110 into the second encoder 132. The second encoder 132 efficiently encodes the three-dimensional image addition data. Audio data is input from the audio data obtainment unit 120 into the audio encoder 133. The audio encoder unit 133 encodes the audio data.

Then, the program-specific information generation unit 140 generates the program-specific information (PSI) for distinguishing among various pieces of information, such as the original image, the three-dimensional image addition data, and the audio data. At this point, the program property information generation unit 140 uses a stream type, as is, that is defined in video and audio for existing digital broadcast in packet PID information listed in a program map table (PMT) for distinguishing the transmission streams (TS) for compatibility between a two-dimensional digital broadcasting system and a three-dimensional digital broadcasting system, and performs a function in which the stream type for the three-dimensional image addition data is reserved or is newly defined as a value that is defined privately by the user.

The packetizer 150 includes a first packetizer 151, a second packetizer 152, and a third packetizer 153. A base stream (ES_Ori) for the original image is input from the encoder 130 into the first packetizer. The first packetizer 130 packets the base stream (ES_Ori) and generates a base stream (PES_Ori) for the original image. A base stream (ES_3D) for the three-dimensional image addition data is input from the encoder 130 into the second packetizer 152. The second packetizer 152 packets the base stream (ES_3D) and generates a base stream packet (PES_3D) for the three-dimensional image addition data. A base stream (ES_Au) for the audio data is input from the encoder 140 into the third packetizer 153. The third packetizer 153 packets the base stream (ES_Au) and generates a base stream packet (PES_Au) for the audio data.

At this time, if an input field that is newly necessary in association with the three-dimensional image addition data is present, the packetizer 150 further performs a function in which the input field for a three-dimensional image addition data type is added to a header portion of the base stream packet (PES_3D) for the three-dimensional image addition data and is defined, in order to distinguish among images at different points in time, disparity information, depth information, and depth information.

The transmission stream generation unit 160 includes a first transmission stream generator 161, a second transmission stream generator 162, a third transmission stream generator 163, and a fourth transmission stream generator 164. The base stream packet (PES_Ori) for the original image is input from the packetizer 150 into the first transmission stream generator 161. The first transmission stream generator 161 generates the transmission stream (TS_Ori) for the original image. The base stream packet (PES_3D) for the three-dimensional image addition data is input from the packetizer 150 into the second transmission stream generator 162. The second transmission stream generator 162 generates the transmission stream packet (TS_3D) for the three-dimensional image addition data. The base stream packet (PES_Au) for the audio data is input from the packetizer 150 into the third transmission stream generator 163. The third transmission stream generator 163 generates the transmission stream packet (TS_Au) for the audio data. The program-specific information (PSI) is input from the program-specific information generation unit 140 into the fourth transmission stream generator 164. The fourth transmission stream generator 164 generates transmission stream packet (TS_PSI) for the program-specific information.

The multiplexer 170 performs a function in which a program clock reference (PCR) is inserted into the transmission stream (TS_Ori) for the original image in order to be used in detecting system time in the last step of the multiplexing process.

As described above, in the broadcast digital signal receiving method and the broadcast digital signal apparatus that are capable of displaying the three-dimensional image according to one embodiment of the present invention, it is possible that a signal for the trick play is processed by assigning a discardable picture to set to two views which make up the three-dimensional image in the digital broadcasting that provides the stereoscopic-type three-dimensional image.

In addition, according to the present invention, it is possible that the signal for the trick play for the multi-view type three-dimensional image is processed by assigning the MVC access unit (AU) and the MVC sub-AU that are safely removable in the digital broadcasting that provides the multi-view type three-dimensional image.

In addition, according to the present invention, in the digital broadcasting that provides the multi-view type three-dimensional image, the trick play for the multi-view type three-dimensional image is effectively provided by storing the view pair ID and information on each view pair priority in PVR assist information.

The various embodiments are described above in order to describe original technological ideas associated with various aspects of the present invention. However, one or more distinctive features of one embodiment can be applied to one or more different embodiments. Some of the constituent elements or the steps according to each of the embodiments, which are described referring to drawings, can be modified or adjusted. The constituent elements and/or the steps can be deleted or moved, and additional constituents and/or steps can be included in each of the embodiments.

At this point, the various distinctive features and technological idea, which are described above, can be realized as being in the form of software, hardware, firmware, middleware or a combination of the two or more of these. For example, a program for realizing a method of receiving a stereoscopic image signal in digital broadcast and for realizing a device for receiving the stereoscopic image signal, which is stored in a computer-readable medium (which is executed by a computer, a processor, a controller, or the like), includes one or more program codes and sections that perform various tasks. Similarly, a software tool for realizing the method of receiving the stereoscopic image signal in the digital broadcast and the device for receiving the stereoscopic image signal, which is stored in a computer-readable medium (which is executed by a computer, a process, a controller, or the like) includes some of program codes that perform various tasks. The configuration and the method of the embodiments according to the present invention, described above, are not applied in a limiting manner, but all of or some of the embodiments may be selectively combined with each other to create various modifications to the embodiments.

It will also be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

## Claims

1. A broadcast digital signal receiving method comprising steps of:

   receiving and demultiplexing a broadcast digital signal in which video streams at a reference point in time and at an extension point in time are included;
   processing discardability information on pictures at the reference point in time and at the extension point in time using transport packets that make up the video streams at the reference point in time and at the extension point in time; and
   decoding the video streams at the reference point in time and at the extension point in time using the discardibility information.

2. The method of claim 1, wherein the discardability information is included in a first transport packet, among multiple transport packets that make up the pictures at the reference at the point in time and at the extension point in time.

3. The method of claim 2, wherein the discardability information is indicated by at least one among a discardble_pair_flag field and a discardable_flag field that are included in the first transport packet.

4. The method of claim 3, wherein the discardable_pair_flag field indicates whether or not the transport packet is decoded if 3D trick play is performed, and
wherein the discardable_flag field indicates whether or not the transport packet is decoded if 2D trick play is performed.

5. The method of claim 4, wherein the discardable_pair_flag field and the discardable_flag field are together included in a single syntax structure.

6. The method of claim 4, wherein if the 3D trick play is performed, when a value of the discardable_pair_flag field included in header information on the first transport packet is 1, the decoding of the multiple transport packets that make up the pictures at the reference point in time and at the extension point in time and that have the same access unit number as an access unit number of the first transport packet is omitted.

7. The method of claim 4, wherein if the 2D trick play is performed, when a value of the discardable_flag field included in the header information on the first transport packet is 1, the decoding of the multiple transport packets that make up the picture at the reference point in time and that have the same access unit number as the access unit number of the first transport packet is omitted.

8. The method of claim 3, wherein the discardable_flag field is provided only in a 1-PID multiplex mode.

9. The method of claim 8, wherein if the video streams at the reference point in time and at the extension point in time are received in a 2-PID multiplex mode and the 2D trick play is performed, the discardability information is extracted from the transport packet that corresponds to a PID value of the video stream at the reference point in time.

10. The method of claim 1, wherein the discardability information is information on the transport packet of which the decoding is omitted, among the transport packets that make up the video streams at the reference point in time and at the extension point in time.

11. The method of claim 1, wherein the video streams at the reference point in time and at the extension point in time have video stream sections at different points in time, respectively.

12. A broadcast digital signal receiving apparatus comprising:

a tuner that receives a broadcast digital signal in which video streams at a reference point in time and at an extension point in time are included;
a demultiplexer that demultiplexes the broadcast digital signal into the video streams at the reference point in time and at the extension point in time;
a PVR processor that processes discardability information on pictures at the reference point in time and at the extension point in time using transport packets that make up the video streams at the reference point in time and at the extension point in time;
a decoder that decodes the video streams at the reference point in time and at the extension point in time using the discardibility information; and
a 3D video processor that controls the decoded video streams at the reference point in time and at the extension point in time.

13. The apparatus of claim 12 further comprising a storage unit in which the transport packet associated with the discardability information and a file associated with trick play control are stored.

14. The apparatus of claim 12, wherein the discardability information is included in a first transport packet, among multiple transport packets that make up the pictures at the reference at the point in time and at the extension point in time.

15. The apparatus of claim 12, wherein in response to a control command to perform 3D trick play, the decoder omits the decoding of the multiple transport packets that make up the pictures at the reference point in time and at the extension point in time and that have the same access unit number as an access unit number of a first transport packet, when a value of a discardable_pair_flag field included in header information on the first transport packet is 1.

**16.** The apparatus of claim 12, wherein in response to a control command to perform 2D trick play, the decoder omits the decoding of the multiple transport packets that make up the picture at the reference point in time and that have the same access unit number as an access unit number of a first transport packet, when a value of a discardable_flag field included in header information on the first transport packet is 1.

# FIG. 1

EP 2 800 391 A1

# FIG. 2A

TP packets for MVC dependent view
TP packets for AVC/H.264 video base view

Access Unit (AU) #1

Base view component #1     Dependent view component #1

# FIG. 2B

TP packets for MVC dependent view
TP packets for AVC/H.264 video base view

AU #1

Dependent view component #1

Base view component #1

AU #2

Dependent view component #2

Base view component #2

# FIG. 3

Transport stream packet
containing left view component

Transport stream packet
containing right view component

Ordered transport packets (emission)

····· L0 L0 L0 L0 R0 R0 R0 R0 L1 L1 ·····

Example of re-ordering while re-muxing
(emission & reception)

····· L0 ····· R0 R1 R1 R1 L0 L0 L1 R1 ·····

End of   Start         End of   Start
R0      of R1          L0       of L1

FIG. 4A

| Syntax | No. of bits | Mnemonic |
|---|---|---|
| transport_packet(){ | | |
|     sync_byte | 8 | bslbf |
|     transport_error_indicator | 1 | bslbf |
|     payload_unit_start_indicator | 1 | bslbf |
|     transport_priority | 1 | bslbf |
|     PID | 13 | uimsbf |
|     transport_scrambling_control | 2 | bslbf |
|     adaptation_field_control | 2 | bslbf |
|     continuity_counter | 4 | uimsbf |
|     if(adaptation_field_control == '10' ‖ adaptation_field_control == '11'){ | | |
|         adaptation_field() | | |
|     } | | |
|     if(adaptation_field_control == '01' ‖ adaptation_field_control == '11') { | | |
|         for (i = 0; i < N; i++){ | | |
|             data_byte | 8 | bslbf |
|         } | | |
|     } | | |
| } | | |

24

# FIG. 4B

| Syntax | No. of bits | Mnemonic |
|---|---|---|
| adaptation_field() { | | |
|     adaptation_field_length | 8 | uimsbf |
|     if (adaptation_field_length > 0) { | | |
|         discontinuity_indicator | 1 | bslbf |
|         random_access_indicator | 1 | bslbf |
|         elementary_stream_priority_indicator | 1 | bslbf |
|         PCR_flag | 1 | bslbf |
|         OPCR_flag | 1 | bslbf |
|         splicing_point_flag | 1 | bslbf |
|         transport_private_data_flag | 1 | bslbf |
|         adaptation_field_extension_flag | 1 | bslbf |
|         if (PCR_flag == '1') { | | |
|             program_clock_reference_base | 33 | uimsbf |
|             reserved | 6 | bslbf |
|             program_clock_reference_extension | 9 | uimsbf |
|         } | | |
|         if (OPCR_flag == '1') { | | |
|             original_program_clock_reference_base | 33 | uimsbf |
|             reserved | 6 | bslbf |
|             original_program_clock_reference_extension | 9 | uimsbf |
|         } | | |
|         if (splicing_point_flag == '1') { | | |
|             splice_countdown | 8 | tcimsbf |
|         } | | |
|         if (transport_private_data_flag == '1') { | | |
|             transport_private_data_length | 8 | uimsbf |
|             for (i = 0; i < transport_private_data_length; i++) { | | |
|                 private_data_byte | 8 | bslbf |
|             } | | |
|         } | | |
|         if (adaptation_field_extension_flag == '1') { | | |
|             adaptation_field_extension_length | 8 | uimsbf |
|             ltw_flag | 1 | bslbf |
|             piecewise_rate_flag | 1 | bslbf |
|             seamless_splice_flag | 1 | bslbf |
|             reserved | 5 | bslbf |
|             if (ltw_flag == '1') { | | |
|                 ltw_valid_flag | 1 | bslbf |
|                 ltw_offset | 15 | uimsbf |
|             } | | |
|             if (piecewise_rate_flag == '1') { | | |
|                 reserved | 2 | bslbf |
|                 piecewise_rate | 22 | uimsbf |
|             } | | |
|             if (seamless_splice_flag == '1') { | | |
|                 splice_type | 4 | bslbf |
|                 DTS_next_AU[32..30] | 3 | bslbf |
|                 marker_bit | 1 | bslbf |
|                 DTS_next_AU[29..15] | 15 | bslbf |
|                 marker_bit | 1 | bslbf |
|                 DTS_next_AU[14..0] | 15 | bslbf |
|                 marker_bit | 1 | bslbf |
|             } | | |
|             for (i = 0; i < N; i++) { | | |
|                 reserved | 8 | bslbf |
|             } | | |
|         } | | |
|         for (i = 0; i < N; i++) { | | |
|             stuffing_byte | 8 | bslbf |
|         } | | |
|     } | | |
| } | | |

# FIG. 4C

| Syntax | No. of bits | Format |
|---|---|---|
| discardable_pic_data( ) { | | |
|    view_component_start_flag | 1 | bslbf |
|    if(view_component_start_flag==1){ | | |
|      AU_number | 32 | uimsbf |
|      discardable_pair_flag | 1 | bslbf |
|      base_view_flag | 1 | bslbf |
|      if(base_view_flag==1) { | | |
|        discardable_flag | 1 | bslbf |
|      } | | |
|    } | | |
|    view_component_end_flag | 1 | bslbf |
|    if(view_component_end_flag==1){ | | |
|      AU_number | 32 | uimsbf |
|    } | | |
| } | | |

EP 2 800 391 A1

# FIG. 5A

```
┌─────────────────────────────┐
│ adaptation_field_control    │
└─────────────────────────────┘
              │
              ▼
┌─────────────────────────────┐
│ transport_private_data_flag │
└─────────────────────────────┘
              │
              ▼
┌─────────────────────────────┐
│ transport_private_data_length│
└─────────────────────────────┘
              │
              ▼
        ◇ view_             0
        component ──────────────────┐
        _start_flag                 │
              │ 1                    ▼
              ▼               ◇ view_
      ┌──────────────┐        component
      │  Au_number   │        _end_flag
      └──────────────┘              │ 1
              │                      ▼
              ▼               ┌──────────────┐
        ◇ discardable_        │  Au_number   │
        piar_flag             └──────────────┘
              │ 1
              ▼
      ┌──────────────┐
      │   discard    │
      └──────────────┘
```

27

# FIG. 5B

```
┌─────────────────────────────┐
│  adaptation_field_control   │
└─────────────────────────────┘
              │
              ▼
┌─────────────────────────────┐
│ transport_private_data_flag │
└─────────────────────────────┘
              │
              ▼
┌───────────────────────────────┐
│ transport_private_data_length │
└───────────────────────────────┘
              │
              ▼
         ◇ view_          0
        component  ───────────────────────┐
        start_flag                        │
              │ 1                          ▼
              ▼                        ◇ view_
        ┌───────────┐                 component
        │ Au_number │                 _end_flag
        └───────────┘                     │ 1
              │                            ▼
              ▼                     ┌───────────┐
        ◇ base_view                 │ Au_number │
          _flag                     └───────────┘
              │ 1
              ▼
        ◇ discardable_
          flag
              │ 1
              ▼
        ┌───────────┐
        │  discard   │
        └───────────┘
```

# FIG. 6

FIG. 7A

Stream #1    Stream #0    Stream #2

3D_view_ID=0

3D_view_ID=1

# FIG. 7B

| Syntax | No. of bits | Format |
|---|---|---|
| discardable_pic_data( ) { | | |
|     view_component_start_flag | 1 | bslbf |
|     if(view_component_start_flag==1){ | | |
|         AU_number | 32 | uimsbf |
|         base_view_flag | 1 | bslbf |
|         if(base_view_flag==1){ | | |
|             discardable_flag | 1 | bslbf |
|         } | | |
|         for(i=0; i<num_3D_views ; i++){ | | |
|             discardable_3D_view_flag | 1 | bslbf |
|             3D_view_ID | | bslbf |
|             3D_view_priority | | bslbf |
|         } | | |
|     } | | |
|     view_component_end_flag | 1 | bslbf |
|     if(view_component_end_flag==1){ | | |
|       AU_number | 32 | uimsbf |
|     } | | |
| } | | |

# FIG. 8

```
┌──────────────────────────────┐
│  adaptation_field_control    │
└──────────────────────────────┘
              │
              ▼
┌──────────────────────────────┐
│ transport_private_data_flag  │
└──────────────────────────────┘
              │
              ▼
┌──────────────────────────────┐
│ transport_private_data_length│
└──────────────────────────────┘
              │
              ▼
        ◇ view_                              0
        component      ──────────────────────────┐
        _start_flag                              │
              │                                  ▼
              │ 1                         ◇ view_
              ▼                            component
      ┌─────────────┐                      _end_flag
      │  Au_number  │                          │
      └─────────────┘                          │ 1
              │                                ▼
              ▼                         ┌─────────────┐
        ◇ discardable_                  │  Au_number  │
         3D_view_                       └─────────────┘
         piar_flag
              │
              │ 1
              ▼
      ┌─────────────┐
      │  3D_view_ID │
      └─────────────┘
              │
              ▼
      ┌──────────────────┐
      │ 3D_view_priority │
      └──────────────────┘
```

# FIG. 9

RF channel I/F

Discardable pic data

Tuner & Demodulator

PVR processor

Storage

Transport packet + trick play control files

TP Demux (PID filter)

PSI/SI sections

PSI/PSIP/SI processor

Multiview Information Processor

Base video component

Multiview video or metadata component

3D video decoder

Base Video Decoder

Secondary Video Decoder #1

Secondary Video Decoder #N

N-to-2 input selection

N-to-2 input selection

N-to-2 input selection

3D_View to Receiver View mapping

Stereo Output formatter

Stereo Output formatter

Stereo Output formatter

3D View 1

3D View 2

3D View M

Multiview Output Control

Multi-View Output

# FIG. 10A

Non-discardable pictures

Discardable pictures

P0  P1  P2  P3  P4  P5  P6  P7  P8  P9  P10  P11  P12  P13  P14

P0  P1  P3  P4  P6  P7  P9  P10  P12  P13

# FIG. 10B

Non-discardable pictures

Discardable pictures

P0  P1  P2  P3  P4  P5  P6  P7  P8  P9  P10  P11  P12  P13  P14

pt0  pt1  pt2  pt3  pt4  pt5  pt6  pt7  pt8  pt9

P0  P1  P3  P4  P6  P7  P9  P10  P12  P13

1x  2x  1x  2x  1x  2x  1x  2x  1x

# FIG. 10C

| |
|---|
| GRASP NUMBER (Nnd) OF NON-DISCARDABLE PICTURES AND NUMBER (Nd) OF DISCARDABLE PICTURES WITHIN GOP — S1010 |

| |
|---|
| CALCULATE MAXIMUM ACCESS TIME THAT IS REALIZABLE — S1020 |

| |
|---|
| DETERMINE TRICK PLAY ACCESS TIME T THAT IS INTENDED TO BE REALIZED IN A RANGE UP TO TMAX — S1030 |

| |
|---|
| PERFORM DECODING ON ONLY NON-DISCARDABLE PICTURE — S1040 |

| |
|---|
| OUTPUT (n x T)-TH PICTURE AT THE TIMING OF THE N-TH PICTURE THAT IS DISPLAYED WITHIN GOP, USING DECODED NON-DISCARDABLE PICTURE — S1050 |

# FIG. 10D

Non-discardable pictures

Discardable pictures

P0  P1  P2  P3  P4  P5  P6  P7  P8  P9  P10  P11  P12  P13  P14

pt0    pt1    pt2    pt3    pt4    pt5    pt6    pt7    pt8    pt9
P0            P3            P6            P9            P12

# FIG. 11A

☐ Non-discardable pictures

☐ Discardable pictures

| P0 | P1 | P2 | P3 | P4 | P5 | P6 | P7 | P8 | P9 | P10 | P11 | P12 | P13 | P14 |

⬇

| P0 | P1 | P3 | P4 | P6 | P7 | P9 | P10 | P12 | P13 |

# FIG. 11B

GRASP NUMBER (Nnd) OF NON-DISCARDABLE PICTURES AND NUMBER (Nd) OF DISCARDABLE PICTURES WITHIN GOP — S1110

ALCULATE MAXIMUM ACCESS TIME THAT IS REALIZABLE — S1120

DETERMINE TRICK PLAY ACCESS TIME T THAT IS INTENDED TO BE REALIZED IN A RANGE UP TO TMAX — S1130

PERFORM DECODING ON ONLY NON-DISCARDABLE PICTURE — S1140

OUTPUT (n x T)-TH PICTURE AT THE TIMING OF THE N-TH PICTURE THAT IS DISPLAYED WITHIN GOP, USING DECODED NON-DISCARDABLE PICTURE — S1150

# FIG. 11C

Non-discardable pictures

Discardable pictures

P0  P1  P2  P3  P4  P5  P6  P7  P8  P9  P10  P11  P12  P13  P14

P0    P12

# FIG. 11D

Non-discardable pictures

Discardable pictures

P0 P1 P2 P3 P4 P5 P6 P7 P8 P9 P10 P11 P12 P13 P14

pt0 pt1 pt2 pt3 pt4 pt5 pt6 pt7 pt8 pt9

P0 P3 P5 P9 P12

■ ■ ■ ■ ■

FIG. 12

## INTERNATIONAL SEARCH REPORT

International application No.

**PCT/KR2012/011593**

### A. CLASSIFICATION OF SUBJECT MATTER

***H04N 21/43(2011.01)i, H04N 13/04(2006.01)i***

According to International Patent Classification (IPC) or to both national classification and IPC

### B. FIELDS SEARCHED

Minimum documentation searched (classification system followed by classification symbols)

H04N 21/43; H04N 5/93; H04N 13/00; H04N 7/26; H04N 5/765; H04N 21/2387; G11B 20/10; H04N 13/04; H04N 5/85

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: 3 Dimension, stereoscopy, extension point, reference point, multi-view point, trick, transmission, recycling, discardable, decoding

### C. DOCUMENTS CONSIDERED TO BE RELEVANT

| Category* | Citation of document, with indication, where appropriate, of the relevant passages | Relevant to claim No. |
|---|---|---|
| Y | KR 10-2007-0016659 A (SAMSUNG ELECTRONICS CO., LTD.) 08 February 2007 See claims 1, 5, 7-9, 16, 23, 27, 31, 35, 39, 44, 49, 53; page 19, line 27 - page 20, lines 1-3; | 1-2,10-14 |
| A | and figures 6, 7. | 3-9,15-16 |
| Y | KR 10-2011-0025123 A (SAMSUNG ELECTRONICS CO., LTD.) 09 March 2011 See claims 1-3, 10-12; paragraphs 36, 39-40, 44-47, 59; and figures 5, 6. | 1-2,10-14 |
| A | WO 2010-134003 A1 (KONINKLIJKE PHILIPS ELECTRONICS N.V.) 25 November 2010 See abstract; page 3, lines 17-27, page 5, lines 8-14; claims 1-2, 8, 10, 12; and figure 9. | 1-16 |
| A | JP 07-327242 A (SANYO ELECTRIC CO LTD) 12 December 1995 See abstract; claim 6; paragraphs 26, 93; and figure 11. | 1-16 |
| A | WO 2010-058547 A1 (PANASONIC CORPORATION) 27 May 2010 See abstract; claims 1, 17-18 and figure 1. | 1-16 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 21 MARCH 2013 (21.03.2013) | **22 MARCH 2013 (22.03.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/011593**

| Patent document cited in search report | Publication date | Patent family member | Publication date |
|---|---|---|---|
| KR 10-2007-0016659 A | 08.02.2007 | CN 1941913 A<br>CN 1941913 B<br>CN 1941913 C0<br>JP 2007-043719 A<br>US 2007-0030911 A1 | 04.04.2007<br>15.06.2011<br>04.04.2007<br>15.02.2007<br>08.02.2007 |
| KR 10-2011-0025123 A | 09.03.2011 | CA 2772417 A1<br>CN 102484735 A<br>EP 2475176 A2<br>WO 2011-028019 A2<br>WO 2011-028019 A3 | 10.03.2011<br>30.05.2012<br>11.07.2012<br>10.03.2011<br>10.06.2011 |
| WO 2010-134003 A1 | 25.11.2010 | AU 2010-250871 A1<br>CA 2762385 A1<br>CN 102428706 A<br>EP 2433429 A1<br>KR 10-2012-0027366 A<br>MX 2011012221 A<br>SG175863A1<br>TW 201105109 A<br>US 2010-0289875 A1<br>US 2012-0063742 A1 | 19.01.2012<br>25.11.2010<br>25.04.2012<br>28.03.2012<br>21.03.2012<br>08.12.2011<br>29.12.2011<br>01.02.2011<br>18.11.2010<br>15.03.2012 |
| JP 07-327242 A | 12.12.1995 | NONE | |
| WO 2010-058547 A1 | 27.05.2010 | CN 102027749 A<br>EP 2348747 A1<br>JP WO2010058547 A1<br>KR 10-2011-0095128 A<br>US 2010-0150523 A1 | 20.04.2011<br>27.07.2011<br>27.05.2010<br>24.08.2011<br>17.06.2010 |

Form PCT/ISA/210 (patent family annex) (July 2009)